# EUROPEAN PATENT APPLICATION

(11) **EP 4 580 286 A1**
(43) Date of publication of application: **02.07.2025**
(21) Application number: 23851702.3
(22) Date of filing: 04.08.2023
(51) Int. Cl.: H04W 72/12, H04L 5/00

(54) **METHOD AND APPARATUS FOR NODE USED FOR WIRELESS COMMUNICATION**

(30) Priority: 08.08.2022 CN 202210946354
(71) Applicant: SHANGHAI LANGBO COMMUNICATION TECHNOLOGY COMPANY LIMITED, Shanghai 200240 (CN)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2023/111145
(87) International publication number: WO 2024/032481

(57) **Abstract**

The present application discloses a method and apparatus for a node used for wireless communication. A first receiver receives a plurality of pieces of RRC signaling, and receives first DCI, wherein the first DCI is used for scheduling a PUSCH on a target cell set, and the target cell set comprises a plurality of cells; and a first transmitter sends the PUSCH on each cell in the target cell set, wherein a first target domain set in the first DCI is applied to the plurality of cells in the target cell set, the first target domain set in the first DCI depends on the configuration of at least one piece of RRC signaling among the plurality of pieces of RRC signaling, the plurality of pieces of RRC signaling are respectively configured for the plurality of cells in the target cell set, and the configurations of the plurality of pieces of RRC signaling are expected to be the same.

## Description

### Technical Field

The present application relates to transmission methods and apparatus in wireless communication systems, in particular to transmission methods and apparatus of wireless signals in wireless communication systems that support cellular networks.

### Background Art

In a 5G NR system, to support Enhanced Mobile Broadband (eMBB), a large amount of Downlink Control Information (DCI) signaling needs to be transmitted to perform scheduling of physical layer channels, such as Physical Downlink Shared Channel (PDSCH) and Physical Uplink Shared Channel (PUSCH); using a single DCI signaling to perform scheduling across a plurality of serving cells is an effective way to reduce DCI overhead. An important aspect to consider is how to determine the domains included in the DCI.

### Summary of Invention

Disclosed in the present application are a solution to the above problems. It is to be noted that the above description uses eMBB as an example; the present application is also applicable to other scenarios such as Ultra-Reliable Low-Latency Communications (URLLC), Vehicle-to-Everything, Internet of Things, Non-Terrestrial Networks (NTN), Multicast Broadcast Services (MBS), Extended Reality (XR), enhanced Machine-Type Communication (eMTC), and full-duplex communication, and can achieve similar technical effects. In addition, the adoption of unified solutions across different scenarios (including but not limited to eMBB, URLLC, V2X, IoT, NTN, MBS, XR, and eMTC) also help reduce hardware complexity and cost, or improve performance. In the absence of conflicts, the embodiments of any of the nodes of the present application and the features of the embodiments may be applied to any of the other nodes. In the absence of conflicts, the embodiments of the present application and the features in the embodiments may be combined with each other arbitrarily.

As an embodiment, the interpretation of terminology in the present application is the definition of a specification protocol TS36 series, referring to 3GPP.

As an embodiment, the interpretation of terminology in the present application is the definition of a specification protocol TS38 series, referring to 3GPP.

As an embodiment, the interpretation of terminology in the present application is the definition of a specification protocol TS37 series, referring to 3GPP.

As an embodiment, the interpretation of terminology in the present application refers to the definitions in the specifications protocol of IEEE (Institute of Electrical and Electronics Engineers).

The present application discloses a method used in a first node for wireless communication, comprising:
receive a plurality of RRC signaling; receive a first DCI, and the first DCI is used to schedule a PUSCH on a target cell set, and the target cell set comprising a plurality of cells;
sending PUSCH on each cell in the target cell set;
wherein the first target domain set in the first DCI is applied to a plurality of cells in the target cell set; the first target domain set in the first DCI depends on the configuration of at least one RRC signaling of a plurality of RRC signaling, which is respectively configured to a plurality of cells in the target cell set, the configuration of a plurality of RRC signaling being expected to be the same.

As an embodiment, the advantages of the above described methods include: Improved uplink transmission performance.

As an embodiment, the advantages of the above described methods include: Avoids ambiguity in interpretation of DCI.

As an embodiment, the advantages of the above described methods include: Improves reliability of configuration.

As an embodiment, the advantages of the above described methods include: Saves signaling overhead.

As an embodiment, the advantages of the above described methods include: Provides good compatibility.

As an embodiment, the advantages of the above described methods include: Changes to existing 3GPP standards are small.

According to one aspect of the present application, for the methods described above, wherein:
A plurality of RRC signaling belongs to a plurality of PUSCH-Configs, respectively.

According to one aspect of the present application, for the methods described above, wherein:
A plurality of RRC signaling belongs to a plurality of PUSCH-ConfigCommons, respectively.

According to one aspect of the present application, for the methods described above, wherein:
A plurality of RRC signaling belongs to a plurality of PUSCH-ServingCellConfigs, respectively.

According to one aspect of the present application, for the methods described above, wherein:

If the configuration of a plurality of RRC signaling is different from each other, the first node determines its own processing of the first DCI.

According to one aspect of the present application, for the methods described above, wherein:
The size of one domain of the first target domain set in the first DCI depends on the configuration of at least one RRC signaling of a plurality of RRC signaling.

According to one aspect of the present application, for the methods described above, wherein:
an indication of one domain of the first target domain set in the first DCI depends on the configuration of at least one RRC signaling of a plurality of RRC signaling.

According to one aspect of the present application, for the methods described above, wherein it comprises:
receiving a first RRC signaling and a second RRC signaling;
wherein the first DCI comprises a second target domain set, the second target domain set in the first DCI is applied to a plurality of cells in the target cell set; a plurality of cells in the target cell set comprises first cell and second cell, the first RRC signaling and the second RRC signaling is configured to the first cell and the second cell, respectively, and the configuration of the first RRC signaling is different from the configuration of the second RRC signaling; for the first cell, the indication of one domain of the second target domain set in the first DCI depends on the configuration of the first RRC signaling; for the second cell, the indication of the domain of the second target domain set in the first DCI depends on the configuration of the second RRC signaling.

As an embodiment, the advantages of the above described methods include: The flexibility of scheduling or configuration is improved within the scope of reasonable control signaling overhead.

The present application discloses a method used in a second node for wireless communication, comprising:
sending a plurality of RRC signaling; sending a first DCI that is used to schedule PUSCH on a target cell set, the target cell set comprising a plurality of cells;
receiving PUSCH on each cell in the target cell set;
wherein the first target domain set in the first DCI is applied to a plurality of cells in the target cell set; the first target domain set in the first DCI depends on the configuration of at least one RRC signaling of a plurality of RRC signaling, which is respectively configured to a plurality of cells in the target cell set, the configuration of a plurality of RRC signaling being expected to be the same.

According to one aspect of the present application, for the methods described above, wherein:
A plurality of RRC signaling belongs to a plurality of PUSCH-Configs, respectively.

According to one aspect of the present application, for the methods described above, wherein:
A plurality of RRC signaling belongs to a plurality of PUSCH-ConfigCommons, respectively.

According to one aspect of the present application, for the methods described above, wherein:
A plurality of RRC signaling belongs to a plurality of PUSCH-ServingCellConfigs, respectively.

According to one aspect of the present application, for the methods described above, wherein:
If the configuration of a plurality of RRC signaling is different from each other, the first node determines its own processing of the first DCI.

According to one aspect of the present application, for the methods described above, wherein:
The size of one domain of the first target domain set in the first DCI depends on the configuration of at least one RRC signaling of a plurality of RRC signaling.

According to one aspect of the present application, for the methods described above, wherein:
an indication of one domain of the first target domain set in the first DCI depends on the configuration of at least one RRC signaling of a plurality of RRC signaling.

According to one aspect of the present application, for the methods described above, wherein it comprises:
sending a first RRC signaling and a second RRC signaling;
wherein the first DCI comprises a second target domain set, the second target domain set in the first DCI is applied to a plurality of cells in the target cell set; a plurality of cells in the target cell set comprises first cell and second cell, the first RRC signaling and the second RRC signaling is configured to the first cell and the second cell, respectively, and the configuration of the first RRC signaling is different from the configuration of the second RRC signaling; for the first cell, the indication of one domain of the second target domain set in the first DCI depends on the configuration of the first RRC signaling; for the second cell, the indication of the domain of the second target domain set in the first DCI depends on the configuration of the second RRC signaling.

The present application discloses a first node for wireless communication, wherein it comprises:
a first receiver receiving a plurality of RRC signaling; receiving a first DCI, and the first DCI being used to schedule PUSCH on a target cell set, and the target cell set comprising a plurality of cells;
a first transmitter transmitting PUSCH on each cell in the target cell set;
wherein the first target domain set in the first DCI is applied to a plurality of cells in the target cell set; the first target domain set in the first DCI depends on the configuration of at least one RRC signaling of a plurality of RRC signaling, which is respectively configured to a plurality of cells in the target cell set, the configuration of a plurality of RRC signaling being expected to be the same.

The present application discloses a second node for wireless communication, wherein it comprises:
a second transmitter sending a plurality of RRC signaling; sending a first DCI, the first DCI being used to schedule PUSCH on a target cell set, the target cell set comprising a plurality of cells;
a second receiver receiving PUSCH on each cell in the target cell set;
wherein the first target domain set in the first DCI is applied to a plurality of cells in the target cell set; the first target domain set in the first DCI depends on the configuration of at least one RRC signaling of a plurality of RRC signaling, which is respectively configured to a plurality of cells in the target cell set, the configuration of a plurality of RRC signaling being expected to be the same.

### Description of Accompanying Drawings

Other features, objects, and advantages of the present application will become more apparent by reading the detailed description of the non-limiting embodiments with reference to the following drawings:
FIG. 1 illustrates a processing flow diagram of a first node according to one embodiment of the present application;
FIG. 2 illustrates a schematic diagram of a network architecture according to one embodiment of the present application;
FIG. 3 illustrates a schematic diagram of an embodiment of a wireless protocol architecture for an user plane and a control plane according to one embodiment of the present application;
FIG. 4 illustrates a schematic diagram of a first communications device and a second communications device according to one embodiment of the present application;
FIG. 5 illustrates a flow diagram of wireless transmission according to one embodiment of the present application;
FIG. 6 illustrates a schematic diagram of an illustration if there are two different configurations of a plurality of RRC signaling according to one embodiment of the present application;
FIG. 7 illustrates a schematic diagram of the relationship between a plurality of RRC signaling and a first target domain set in a first DCI according to one embodiment of the present application;
FIG. 8 illustrates a schematic diagram of the relationship between a plurality of RRC signaling and a first target domain set in a first DCI according to one embodiment of the present application;
FIG. 9 illustrates a schematic diagram of a plurality of RRC signaling according to one embodiment of the present application;
FIG. 10 illustrates a schematic diagram of signal reception for a first node according to one embodiment of the present application;
FIG. 11 illustrates a structural block diagram of a processing apparatus for use in a first node device according to one embodiment of the present application;
FIG. 12 illustrates a structural block diagram of a processing apparatus for use in a second node device according to one embodiment of the present application.

### Specific Implementation Method

The technical solutions of the present application will be described in further detail below in conjunction with the accompanying drawings. It is to be noted that in the absence of conflicts, the embodiments of the present application and the features in the embodiments may be combined with each other arbitrarily.

### Embodiment 1

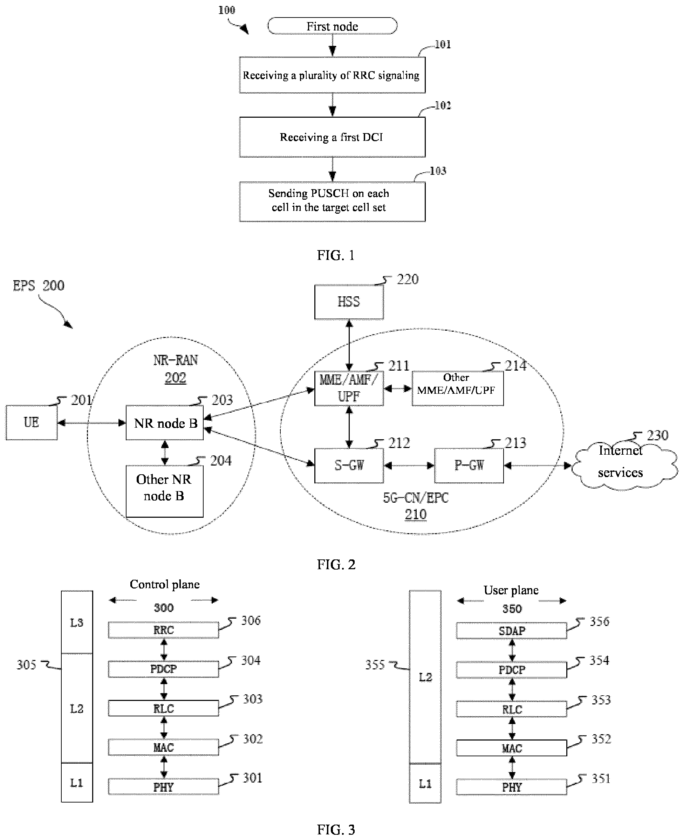

Embodiment 1 exemplifies a processing flow diagram of the first node according to one embodiment of the present application, as shown in FIG. 1.

In Embodiment 1, the first node in the present application receives a plurality of RRC signaling in Step 101; receives a first DCI in Step 102; and sends PUSCH on each cell in a target cell set in Step 103.

In Embodiment 1, the first DCI is used to schedule the PUSCH on the target cell set, and the target cell set comprising a plurality of cells; the first target domain set in the first DCI is applied to a plurality of cells in the target cell set; the first target domain set in the first DCI depends on the configuration of at least one RRC signaling of a plurality of RRC signaling, and the configuration of a plurality of RRC signaling being configured to a plurality of a plurality of cells in the target cell, respectively.

As an embodiment, each RRC signaling of a plurality of RRC signaling includes at least one Information Element (IE).

As an embodiment, each RRC signaling of a plurality of RRC signaling includes at least one domain of at least one Information Element (IE).

As an embodiment, each RRC signaling of a plurality of RRC signaling includes at least a portion of ServingCellConfigs.

As an embodiment, each RRC signaling of a plurality of RRC signaling includes at least a portion of BWP-Uplinks.

As an embodiment, each RRC signaling of a plurality of RRC signaling includes at least a portion of BWP-UplinkCommons.

As an embodiment, each RRC signaling of a plurality of RRC signaling includes at least a portion of BWP-UplinkDedicateds.

As an embodiment, each RRC signaling of a plurality of RRC signaling includes at least a portion of PUSCH-Configs.

As an embodiment, each RRC signaling of a plurality of RRC signaling includes at least a portion of PUSCH-ConfigCommons.

As an embodiment, each RRC signaling of a plurality of RRC signaling includes at least a portion of PUSCH-ServingCellConfigs.

As an embodiment, each RRC signaling of a plurality of RRC signaling is used to determine the Number of repetitions for data.

As an embodiment, each RRC signaling of a plurality of RRC signaling is used to determine a Transmission scheme for PUSCH.

As an embodiment, the transmission scheme is one of the transmission of codebook-based, non-codebook-based, and single antenna ports.

As an embodiment, the transmission scheme is one of codebook-based transmission and non-codebook-based transmission.

As an embodiment, each RRC signaling of a plurality of RRC signaling is used to determine a DMRS configuration for PUSCH transmission using PUSCH mapping type A.

As an embodiment, each RRC signaling of a plurality of RRC signaling is used to determine a DMRS configuration for PUSCH transmission using PUSCH mapping type B.

As an embodiment, each RRC signaling of a plurality of RRC signaling is used to determine power control of PUSCH.

As an embodiment, each RRC signaling of a plurality of RRC signaling is used to determine the frequency hopping mode.

As an embodiment, each RRC signaling of a plurality of RRC signaling is used to determine frequency hopping offset(s) set.

As an embodiment, each RRC signaling of a plurality of RRC signaling is used to determine a resource allocation type.

As an embodiment, each RRC signaling of a plurality of RRC signaling is used to determine the frequency domain resource allocation type.

As an embodiment, each RRC signaling of a plurality of RRC signaling is used to determine List of time domain allocations for timing of UL assignment to UL data.

As an embodiment, each RRC signaling of a plurality of RRC signaling is used to determine the MCS table used by PUSCH without a transform pre-encoder.

As an embodiment, each RRC signaling of a plurality of RRC signaling is used to determine the MCS table used by PUSCH with the transformed pre-encoder.

As an embodiment, each RRC signaling of a plurality of RRC signaling is used to determine whether transform pre-coding is enabled.

As an embodiment, each RRC signaling of a plurality of RRC signaling is used to determine a particular selection of a transformer precoder for PUSCH.

As an embodiment, each RRC signaling of a plurality of RRC signaling is used to determine a Subset of PMIs addressed by TPMI.

As an embodiment, each RRC signaling of a plurality of RRC signaling is used to determine a Subset of PMIs addressed by TRIs.

As an embodiment, each RRC signaling of a plurality of RRC signaling is used to determine the RBG size for PUSCH selected between Configuration 1 and Configuration 2.

As an embodiment, each RRC signaling of a plurality of RRC signaling is used to determine a set of beta offset amounts.

As an embodiment, each RRC signaling of a plurality of RRC signaling is used to determine whether pi/2-BPSK modulation is enabled with the pre-coding of the transform.

As an embodiment, each RRC signaling of a plurality of RRC signaling is used to indicate the Number of repetitions for data.

As an embodiment, each RRC signaling of a plurality of RRC signaling is used to indicate a Transmission scheme of PUSCH.

As an embodiment, the transmission scheme is one of the transmission of codebook-based, non-codebook-based, and single antenna ports.

As an embodiment, the transmission scheme is one of codebook-based transmission and non-codebook-based transmission.

As an embodiment, each RRC signaling of a plurality of RRC signaling is used to indicate a DMRS configuration transmitted using PUSCH mapping type A.

As an embodiment, each RRC signaling of a plurality of RRC signaling is used to indicate a DMRS configuration transmitted using PUSCH mapping type B.

As an embodiment, each RRC signaling of a plurality of RRC signaling is used to indicate power control of PUSCH.

As an embodiment, each RRC signaling of a plurality of RRC signaling is used to indicate frequency hopping mode.

As an embodiment, the name of each RRC signaling of a plurality of RRC signaling includes txConfig, the first target domain set including pre-coding information and layer number domains.

As an embodiment, each RRC signaling of a plurality of RRC signaling is a txConfig, the first target domain set comprising pre-coding information and a layer number domain.

As an embodiment, each RRC signaling of a plurality of RRC signaling is used to indicate a transmission scheme of PUSCH, the first target domain set comprising pre-coding information and layer number domains.

As an embodiment, each RRC signaling of a plurality of RRC signaling is a txConfig, the first target domain set comprising pre-coding information and a layer number domain.

As an embodiment, the name of each RRC signaling of a plurality of RRC signaling includes the transformPrecoder, and the first target domain set includes the PTRS-DMRS associated domain.

As an embodiment, each RRC signaling of a plurality of RRC signaling is a transformPrecoder, the first target domain set includes PTRS-DMRS associated domains.

As an embodiment, each RRC signaling of a plurality of RRC signaling is used to indicate whether to enable transform pre-coding, the first target domain set including PTRS-DMRS associated domains.

As an embodiment, the name of each RRC signaling of a plurality of RRC signaling includes a transformPrecoder, and the first target domain set includes a DMRS sequence initialization domain.

As an embodiment, each RRC signaling of a plurality of RRC signaling is a transformPrecoder, the first target domain set includes a DMRS sequence initialization domain.

As an embodiment, each RRC signaling of a plurality of RRC signaling is used to indicate whether to enable transform pre-coding, the first target domain set including the DMRS sequence initialization domain.

As an embodiment, each RRC signaling of a plurality of RRC signaling is used to indicate frequency hopping offsets (s) set.

As an embodiment, each RRC signaling of a plurality of RRC signaling is used to indicate a resource allocation type.

As an embodiment, each RRC signaling of a plurality of RRC signaling is used to indicate a frequency domain resource allocation type.

As an embodiment, each RRC signaling of a plurality of RRC signaling is used to indicate a List of time domain allocations for timing of UL assignment to UL data.

As an embodiment, each RRC signaling of a plurality of RRC signaling is used to indicate the MCS table used by PUSCH without a transform pre-encoder.

As an embodiment, each RRC signaling of a plurality of RRC signaling is used to indicate the MCS table used by PUSCH with the transformed pre-encoder.

As an embodiment, each RRC signaling of a plurality of RRC signaling is used to indicate whether or not the transform pre-coding is enabled.

As an embodiment, each RRC signaling of a plurality of RRC signaling is used to indicate a particular selection of a transformer precoder for PUSCH.

As an embodiment, each RRC signaling of a plurality of RRC signaling is used to indicate a Subset of PMIs addressed by TPMI.

As an embodiment, each RRC signaling of a plurality of RRC signaling is used to indicate a Subset of PMIs addressed by TRIs.

As an embodiment, each RRC signaling of a plurality of RRC signaling is used to indicate the RBG size for PUSCH selected between Configuration 1 and Configuration 2.

As an embodiment, each RRC signaling of a plurality of RRC signaling is used to indicate a beta offset set.

As an embodiment, each RRC signaling of a plurality of RRC signaling is used to indicate whether a pi/2-BPSK modulation with the pre-coding of the transform is enabled or not.

As an embodiment, each RRC signaling of a plurality of RRC signaling is used to indicate the presence or absence of an Antenna ports domain.

As an embodiment, each RRC signaling of a plurality of RRC signaling is used to indicate whether to enable PUSCH repetition counted based on available time slots.

As an embodiment, each RRC signaling of a plurality of RRC signaling is used to indicate that a set of the configured beta offset amounts on the HARQ-ACK are reused to the PUSCH with a different priority.

As an embodiment, each RRC signaling of a plurality of RRC signaling is used to indicate information of a DMRS bundling for PUSCH.

As an embodiment, each RRC signaling of a plurality of RRC signaling is used to indicate the presence or absence of a DMRS Sequence Initialization domain.

As an embodiment, each RRC signaling of a plurality of RRC signaling is used to indicate the size of the HARQ process number domain.

As an embodiment, each RRC signaling of a plurality of RRC signaling is used to indicate a pattern of invalid symbols of type B for PUSCH transmission.

As an embodiment, each RRC signaling in a plurality of RRC signaling is used to indicate: When two SRS resource sets are configured for PUSCH transmission and PUSCH transmission occasions are associated with two SRS resource sets, whether the Cyclical mapping pattern or Sequential mapping pattern should be followed.

As an embodiment, each RRC signaling of a plurality of RRC signaling is used to indicate a list of minimum K2 values.

As an embodiment, each RRC signaling of a plurality of RRC signaling is used to indicate the size of the Redundancy version domain.

As an embodiment, each RRC signaling of a plurality of RRC signaling is used to indicate the number of symbols invalid for PUSCH repetition type B after the last semi-static DL (Downlink) symbol.

As an embodiment, each RRC signaling of a plurality of RRC signaling is used to indicate the presence or absence of a priority indicator domain.

As an embodiment, each RRC signaling of a plurality of RRC signaling is used to indicate whether PUSCH repetition type A or PUSCH repetition type B is followed.

As an embodiment, each RRC signaling of a plurality of RRC signaling is used to indicate the presence or absence of a second TPC domain.

As an embodiment, each RRC signaling in a plurality of RRC signaling is used to indicate the RV offset configured for the starting Redundancy version (RV) for a first repetition (first actual repetition in PUSCH repetition type B) corresponding to a second SRS resource set for PUSCH.

As an embodiment, each RRC signaling of a plurality of RRC signaling is used to indicate a combined list of cycle prefix extensions, channel access priority class (CAPC) and Uplink (UL) channel access types.

As an embodiment, each RRC signaling of a plurality of RRC signaling is used to indicate a UL full power transmission mode.

As an embodiment, each RRC signaling of a plurality of RRC signaling is used to indicate the scheduling granularity applicable to the origin and length indications of resource allocation type 1.

As an embodiment, each RRC signaling of a plurality of RRC signaling is used to determine the presence or absence of an Antenna ports domain.

As an embodiment, each RRC signaling of a plurality of RRC signaling is used to determine whether to enable PUSCH repetition counted based on available time slots.

As an embodiment, each RRC signaling of a plurality of RRC signaling is used to determine a set of the offset amounts of the beta configured on the HARQ-ACK that are multiplexed to a PUSCH with a different priority.

As an embodiment, each RRC signaling of a plurality of RRC signaling is used to determine information of DMRS bundling for PUSCH.

As an embodiment, each RRC signaling in a plurality of RRC signaling is used to determine the presence or absence of a DMRS Sequence Initialization domain.

As an embodiment, each RRC signaling of a plurality of RRC signaling is used to determine the size of the HARQ process number domain.

As an embodiment, each RRC signaling of a plurality of RRC signaling is used to determine a pattern of invalid symbols for PUSCH transmission type B.

As an embodiment, each RRC signaling of a plurality of RRC signaling is used to determine: When two SRS resource sets are configured for PUSCH transmission and PUSCH transmission occasions are associated with two SRS resource sets, whether the Cyclical mapping pattern or Sequential mapping pattern should be followed.

As an embodiment, each RRC signaling of a plurality of RRC signaling is used to determine a list of minimum K2 values.

As an embodiment, each RRC signaling of a plurality of RRC signaling is used to determine the size of a Redundancy version domain.

As an embodiment, each RRC signaling of a plurality of RRC signaling is used to determine the number of symbols that are invalid for PUSCH repetition type B after the last semi-static Downlink (DL) symbol.

As an embodiment, each RRC signaling of a plurality of RRC signaling is used to determine the presence or absence of a priority indicator domain.

As an embodiment, each RRC signaling of a plurality of RRC signaling is used to determine whether to follow PUSCH repetition type A behavior or PUSCH repetition type B behavior.

As an embodiment, each RRC signaling of a plurality of RRC signaling is used to determine the presence or absence of a second TPC field.

As an embodiment, each RRC signaling of a plurality of RRC signaling is used to determine the RV offset configured for the starting Redundancy version (RV) for a first actual repetition in PUSCH repetition type B corresponding to a second SRS resource set for PUSCH.

As an embodiment, each RRC signaling of a plurality of RRC signaling is used to determine a combined list of cycle prefix extensions, channel access priority classes (CAPC) and Uplink (UL) channel access types.

As an embodiment, each RRC signaling of a plurality of RRC signaling is used to determine UL full power transmission mode.

As an embodiment, each RRC signaling of a plurality of RRC signaling is used to determine the scheduling granularity applicable to the start point and length indications of resource distribution type 1.

As an embodiment, each RRC signaling of a plurality of RRC signaling includes a push-AggregationFactor.

As an embodiment, each RRC signaling of a plurality of RRC signaling includes a txConfig.

As an embodiment, each RRC signaling of a plurality of RRC signaling includes a dmrs-UplinkForPUSCH-MappingTypeA.

As an embodiment, each RRC signaling of a plurality of RRC signaling includes a dmrs-UplinkForPUSCH-MappingTypeB.

As an embodiment, each RRC signaling of a plurality of RRC signaling includes a push-PowerControl.

As an embodiment, each RRC signaling of a plurality of RRC signaling includes a frequencyHopping.

As an embodiment, each RRC signaling of a plurality of RRC signaling includes a frequencyHoppingOffsetLists.

As an embodiment, each RRC signaling of a plurality of RRC signaling includes a resourceAllocation.

As an embodiment, each RRC signaling of a plurality of RRC signaling includes a push-TimeDomainAllocationList.

As an embodiment, each RRC signaling of a plurality of RRC signaling includes a mcs-Table.

As an embodiment, each RRC signaling of a plurality of RRC signaling includes a mcs-TableTransformPrecoder.

As an embodiment, each RRC signaling of a plurality of RRC signaling includes a transformPrecoder.

As an embodiment, each RRC signaling of a plurality of RRC signaling includes a codebookSubset.

As an embodiment, each RRC signaling of a plurality of RRC signaling includes a maxRank.

As an embodiment, each RRC signaling of a plurality of RRC signaling includes a rbg-Size.

As an embodiment, each RRC signaling of a plurality of RRC signaling includes an uci-OnPUSCH.

As an embodiment, each RRC signaling of a plurality of RRC signaling includes a tp-pi2BPSK.

As an embodiment, each RRC signaling of a plurality of RRC signaling is a push-AggregationFactor.

As an embodiment, each RRC signaling of a plurality of RRC signaling is a txConfig.

As an embodiment, each RRC signaling of a plurality of RRC signaling is a dmrs-UplinkForPUSCH-MappingTypeA.

As an embodiment, each RRC signaling of a plurality of RRC signaling is a dmrs-UplinkForPUSCH-MappingTypeB.

As an embodiment, each RRC signaling of a plurality of RRC signaling is a push-PowerControl.

As an embodiment, each RRC signaling of a plurality of RRC signaling is a frequencyHopping.

As an embodiment, each RRC signaling of a plurality of RRC signaling is a frequencyHoppingOffsetLists.

As an embodiment, each RRC signaling of a plurality of RRC signaling is a resourceAllocation.

As an embodiment, each RRC signaling of a plurality of RRC signaling is a push-TimeDomainAllocationList.

As an embodiment, each RRC signaling of a plurality of RRC signaling is a mcs-Table.

As an embodiment, each RRC signaling of a plurality of RRC signaling is a mcs-TableTransformPrecoder.

As an embodiment, each RRC signaling of a plurality of RRC signaling is a transformPrecoder.

As an embodiment, each RRC signaling of a plurality of RRC signaling is a codebookSubset.

As an embodiment, each RRC signaling of a plurality of RRC signaling is a maxRank.

As an embodiment, each RRC signaling of a plurality of RRC signaling is a rbg-size.

As an embodiment, each RRC signaling of a plurality of RRC signaling is an uci-OnPUSCH.

As an embodiment, each RRC signaling of a plurality of RRC signaling is a tp-pi2BPSK.

As an embodiment, the name of each RRC signaling of a plurality of RRC signaling includes a push-AggregationFactor.

As an embodiment, the name of each RRC signaling of a plurality of RRC signaling includes a txConfig.

As an embodiment, the name of each RRC signaling of a plurality of RRC signaling includes a dmrs-UplinkForPUSCH-MappingTypeA.

As an embodiment, the name of each RRC signaling of a plurality of RRC signaling includes a dmrs-UplinkForPUSCH-MappingTypeB.

As an embodiment, the name of each RRC signaling of a plurality of RRC signaling includes a push-PowerControl.

As an embodiment, the name of each RRC signaling of a plurality of RRC signaling includes a frequencyHopping.

As an embodiment, the name of each RRC signaling of a plurality of RRC signaling includes a frequencyHoppingOffsetLists.

As an embodiment, the name of each RRC signaling of a plurality of RRC signaling includes a resourceAllocation.

As an embodiment, the name of each RRC signaling of a plurality of RRC signaling includes a push-TimeDomainAllocationList.

As an embodiment, the name of each RRC signaling of a plurality of RRC signaling includes a mcs-Table.

As an embodiment, the name of each RRC signaling of a plurality of RRC signaling includes a mcs-TableTransformPrecoder.

As an embodiment, the name of each RRC signaling of a plurality of RRC signaling includes a transformPrecoder.

As an embodiment, the name of each RRC signaling of a plurality of RRC signaling includes a codebookSubset.

As an embodiment, the name of each RRC signaling of a plurality of RRC signaling includes a maxRank.

As an embodiment, the name of each RRC signaling of a plurality of RRC signaling includes a rbg-size.

As an embodiment, the name of each RRC signaling of a plurality of RRC signaling includes an uci-OnPUSCH.

As an embodiment, the name of each RRC signaling of a plurality of RRC signaling includes a tp-pi2BPSK.

As an embodiment, the name of each RRC signaling of a plurality of RRC signaling includes a minimumSchedulingOffsetK2.

As an embodiment, the name of each RRC signaling of a plurality of RRC signaling includes an ul-AccessConfigList.

As an embodiment, the name of each RRC signaling of a plurality of RRC signaling includes a harq-ProcessNumberSize.

As an embodiment, the name of each RRC signaling of a plurality of RRC signaling includes dmrs-SequenceInitiation.

As an embodiment, the name of each RRC signaling of a plurality of RRC signaling includes a numberOfBitsForRV.

As an embodiment, the name of each RRC signaling of a plurality of RRC signaling includes an antennaPortsFieldPresence.

As an embodiment, the name of each RRC signaling of a plurality of RRC signaling includes an invalidSymbolPatternIndicator.

As an embodiment, the name of each RRC signaling of a plurality of RRC signaling includes a priorityIndicator.

As an embodiment, the name of each RRC signaling of a plurality of RRC signaling includes a push-RepTypeIndicator.

As an embodiment, the name of each RRC signaling of a plurality of RRC signaling includes a resourceAllocationType1Granularity.

As an embodiment, the name of each RRC signaling of a plurality of RRC signaling includes an ul-FullPowerTransmission.

As an embodiment, the name of each RRC signaling of a plurality of RRC signaling includes a numberOfInvalidSymbolsForDL- UL-Switching.

As an embodiment, the name of each RRC signaling of a plurality of RRC signaling includes a betaOffsetsCrossPri0.

As an embodiment, the name of each RRC signaling of a plurality of RRC signaling includes a betaOffsetsCrossPri1.

As an embodiment, the name of each RRC signaling of a plurality of RRC signaling includes a mappingPattern.

As an embodiment, the name of each RRC signaling of a plurality of RRC signaling includes a secondTPCField.

As an embodiment, the name of each RRC signaling of a plurality of RRC signaling includes a sequenceOffsetForRV.

As an embodiment, the name of each RRC signaling of a plurality of RRC signaling includes an availableSlotCounting.

As an embodiment, the name of each RRC signaling of a plurality of RRC signaling includes a dmrs-BundlingPUSCH-Config.

As an embodiment, the name of each RRC signaling of a plurality of RRC signaling includes a -r18.

As an embodiment, the name of each RRC signaling of a plurality of RRC signaling includes a -r19.

As an embodiment, the name of each RRC signaling of a plurality of RRC signaling includes a -r20.

As an embodiment, each RRC signaling of a plurality of RRC signaling is used to determine the number of maximum CBGs per TB.

As an embodiment, each RRC signaling of a plurality of RRC signaling is used to determine whether to enable CBG-based transmission.

As an embodiment, each RRC signaling of a plurality of RRC signaling is used to determine the maximum Multiple-Input Multiple-Output (MIMO) layer for PUSCH in all Bandwidth parts (BWPs) of the UL corresponding to the cell.

As an embodiment, each RRC signaling of a plurality of RRC signaling is used to determine the number of HARQ processes used on the PUSCH of the cell.

As an embodiment, each RRC signaling of a plurality of RRC signaling is used to determine whether to enable the configuration of the advanced processing time capability 2 for PUSCH.

As an embodiment, each RRC signaling in a plurality of RRC signaling is used to determine whether to enable a Limited buffer rate-matching (LBRM)

As an embodiment, each RRC signaling of a plurality of RRC signaling is used to determine the HARQ

mode for the HARQ process ID.

As an embodiment, each RRC signaling of a plurality of RRC signaling is used to determine whether to enable group hopping for RMRS transmission with a pre-coded transform.

As an embodiment, each RRC signaling of a plurality of RRC signaling is used to determine the power offset between msg3 and Random Access Channel(s) (RACH) preamble transmission.

As an embodiment, each RRC signaling of a plurality of RRC signaling is used to determine (in addition to msg3) a P0 value for PUSCH with grant.

As an embodiment, each RRC signaling of a plurality of RRC signaling is used to indicate the number of maximum CBGs per TB.

As an embodiment, each RRC signaling of a plurality of RRC signaling is used to indicate whether CBG-based transmission is enabled.

As an embodiment, each RRC signaling of a plurality of RRC signaling is used in all Bandwidth parts (BWPs) indicating the UL corresponding to the cell for the maximum Multiple-Input Multiple-Output (MIMO) layer used for PUSCH.

As an embodiment, each RRC signaling of a plurality of RRC signaling is used to indicate the number of HARQ processes used on the PUSCH of the cell.

As an embodiment, each RRC signaling of a plurality of RRC signaling is used to indicate whether to enable the configuration of advanced processing time capability 2 for the PUSCH.

As an embodiment, each RRC signaling in a plurality of RRC signaling is used to indicate whether to enable a Limited buffer rate-matching (LBRM).

As an embodiment, each RRC signaling of a plurality of RRC signaling is used to indicate a HARQ mode for a HARQ process ID.

As an embodiment, each RRC signaling of a plurality of RRC signaling is used to indicate whether to enable group hopping for a group transmission with a pre-coded RMRS.

As an embodiment, each RRC signaling of a plurality of RRC signaling is used to indicate a power offset between msg3 and Random Access Channel(s) (RACHs) preamble transmission.

As an embodiment, each RRC signaling of a plurality of RRC signaling is used to indicate (other than msg3) a P0 value for PUSCH with grant.

As an embodiment, each RRC signaling of a plurality of RRC signaling is a codeBlockGroupTransmission.

As an embodiment, each RRC signaling of a plurality of RRC signaling is a rateMatching.

As an embodiment, each RRC signaling of a plurality of RRC signaling is a xOverhead.

As an embodiment, each RRC signaling of a plurality of RRC signaling is a maxMIMO-Layers.

As an embodiment, each RRC signaling of a plurality of RRC signaling is a processingType2Enabled.

As an embodiment, each RRC signaling of a plurality of RRC signaling is a nrofHARQ-ProcessesForPUSCH-r17.

As an embodiment, each RRC signaling of a plurality of RRC signaling is an uplinkHARQ-mode-r17.

As an embodiment, each RRC signaling of a plurality of RRC signaling is a groupHoppingEnabledTransformPrecoding.

As an embodiment, each RRC signaling of a plurality of RRC signaling is a msg3-DeltaPreamble.

As an embodiment, each RRC signaling of a plurality of RRC signaling is a p0-NominalWithGrant.

As an embodiment, the name of each RRC signaling of a plurality of RRC signaling includes a codeBlockGroupTransmission.

As an embodiment, the name of each RRC signaling of a plurality of RRC signaling includes a rateMatching.

As an embodiment, the name of each RRC signaling of a plurality of RRC signaling includes a xOverhead.

As an embodiment, the name of each RRC signaling of a plurality of RRC signaling includes a maxMIMO-Layers.

As an embodiment, each RRC signaling name of a plurality of RRC signaling includes a processingType2Enabled.

As an embodiment, the name of each RRC signaling of a plurality of RRC signaling includes a nrofHARQ-ProcessesForPUSCH.

As an embodiment, the name of each RRC signaling of a plurality of RRC signaling includes an uplinkHARQ-mode.

As an embodiment, the name of each RRC signaling of a plurality of RRC signaling includes a groupHoppingEnabledTransformPrecoding.

As an embodiment, the name of each RRC signaling of a plurality of RRC signaling includes a msg3-DeltaPreamble.

As an embodiment, the name of each RRC signaling of a plurality of RRC signaling includes a p0-NominalWithGrant.

As an embodiment, each RRC signaling of a plurality of RRC signaling includes at least a portion of SRS-Config.

As an embodiment, each RRC signaling of a plurality of RRC signaling is a SRS-Config.

As an embodiment, the name of each RRC signaling of a plurality of RRC signaling includes a SRS-Config.

As an embodiment, each RRC signaling of a plurality of RRC signaling includes an AvailableSlotOffset.

As an embodiment, each RRC signaling of a plurality of RRC signaling is an AvailableSlotOffset.

As an embodiment, the name of each RRC signaling of a plurality of RRC signaling includes an AvailableSlotOffset.

As an embodiment, when one RRC signaling belongs to the ServingCellConfig IE configured with a cell, the RRC signaling is configured to the cell.

As an embodiment, when one RRC signaling belongs to a BWP-Uplink IE configured with a cell, the RRC signaling is configured to the cell.

As an embodiment, when one RRC signaling belongs to a BWP-UplinkCommon IE configured with a cell, the RRC signaling is configured to the cell.

As an embodiment, when one RRC signaling belongs to a BWP-UplinkDedicated IE configured with a cell, the RRC signaling is configured to the cell.

As an embodiment, when a RRC signaling is configured to a Bandwidth part (BWP) of a cell, the RRC signaling is configured to the cell.

As an embodiment, in the present application, one RRC signaling is configured to a cell that includes the following meanings: This RRC signaling is configured for PUSCH transmission on this cell.

As an embodiment, the first DCI includes physical layer signaling.

As an embodiment, the first DCI includes a Downlink control information (DCI) signaling.

As an embodiment, the first DCI is a DCI format.

As an embodiment, the first DCI includes at least one domain in a DCI format.

As an embodiment, the first DCI uses the DCI format 0_1.

As an embodiment, the first DCI uses the DCI format 0_2.

As an embodiment, the first DCI uses the DCI format 0_3.

As an embodiment, the first DCI uses the DCI format 0_4.

As an embodiment, the first DCI uses the DCI format 0_5.

As an embodiment, the first DCI uses the DCI format 0_6.

As an embodiment, the first DCI uses the DCI format 5_0.

As an embodiment, the first DCI uses the DCI format 5_1.

As an embodiment, the first DCI uses the DCI format 5_2.

As an embodiment, the first DCI uses the DCI format 6_0.

As an embodiment, the first DCI uses the DCI format 6_1.

As an embodiment, the first DCI uses the DCI format 6_2.

As an embodiment, the target cell set includes at least one cell.

As an embodiment, the expression sends PUSCH on each cell in the target cell set comprises: sending a signal on at least one PUSCH on each cell in the target cell set.

As an embodiment, the first DCI is used to indicate at least one of the time domain resources occupied by the Physical Uplink Shared Channel (PUSCH), the frequency domain resources occupied, the Modulation and Coding Scheme (MCS) used, and the precoding applied on each cell in the target cell set.

As an embodiment, scheduling based on the first DCI: The first node sends at least one PUSCH on each cell in the target cell set.

As a sub-embodiment of the above embodiment, there is one cell in the target cell set on which the first node sends a plurality of PUSCHs scheduled by the first DCI.

As an embodiment, based on the scheduling of the first DCI, the first node performs signal transmission in at least one PUSCH on each cell of the target cell set.

As an embodiment, based on the scheduling of the first DCI, the first node sends at least one of a Transport Block(s) (TB(s)) or a Channel state information (CSI) report in one of the PUSCH on each of the target cells in the target cell set.

As an embodiment, before a bit block that includes a transmission block or CSI report bits is transmitted on the PUSCH, the bit block sequentially undergoes at least part of the following processes: CRC attachment, code block segmentation, code block CRC attachment, channel coding, rate matching, code block concatenation, scrambling, modulation, layer mapping, transform precoding, precoding, mapping to virtual resource blocks, mapping from virtual to physical resource blocks, multi-carrier symbol generation, and modulation up-conversion.

As an embodiment, before a bit block that includes a transmission block or CSI report bits is transmitted on the PUSCH, the bit block sequentially undergoes at least part of the following processes: CRC attachment, code block segmentation, code block CRC attachment, channel coding, rate matching, code block concatenation, scrambling, modulation, layer mapping, transform precoding, precoding, mapping to virtual resource blocks, mapping from virtual to physical resource blocks.

As an embodiment, the first target domain set includes only a domain.

As an embodiment, the first target domain set includes a plurality of domain.

As an embodiment, one domain in the first target domain set includes at least one bit.

As an embodiment, one domain in the first target domain set includes non-negative integer bits.

As an embodiment, the first target domain set includes a Frequency domain resource assignment domain.

As an embodiment, the first target domain set includes a Time domain resource assignment domain. As an embodiment, the first target domain set includes a Frequency hopping flag domain.

As an embodiment, the first target domain set includes a Modulation and coding scheme domain.

As an embodiment, the first target domain set includes a HARQ process number domain.

As an embodiment, the first target domain set includes a Second TPC command for scheduled PUSCH domain for PUSCH.

As an embodiment, the first target domain set includes a SRS resource indicator domain.

As an embodiment, the first target domain set includes a SRS resource set indicator domain.

As an embodiment, the first target domain set includes a Second SRS resource indicator domain.

As an embodiment, the first target domain set includes a Precoding information and number of layers domain.

As an embodiment, the first target domain set includes a Second Precoding information domain.

As an embodiment, the first target domain set includes an Antenna ports domain.

As an embodiment, the first target domain set includes a CSI request domain.

As an embodiment, the first target domain set includes a SRS request domain.

As an embodiment, the first target domain set includes a SRS offset indicator domain.

As an embodiment, the first target domain set includes a CBG transmission information (CBGTI) domain.

As an embodiment, the first target domain set includes a PTRS-DMRS association domain.

As an embodiment, the first target domain set includes a Second PTRS-DMRS association domain.

As an embodiment, the first target domain set includes a beta_offset indicator domain.

As an embodiment, the first target domain set includes a DMRS sequence initialization domain.

As an embodiment, the first target domain set includes a UL-SCH indicator domain.

As an embodiment, the first target domain set includes a ChannelAccess-CPext-CAPC domain.

As an embodiment, the first target domain set includes an Open-loop power control parameter set indication domain.

As an embodiment, the first target domain set includes a SCell dormancy indication domain.

As an embodiment, the first target domain set includes a Priority indicator domain.

As an embodiment, the first target domain set includes an Invalid symbol pattern indicator domain.

As an embodiment, the first target domain set includes a Minimum applicable scheduling offset indicator domain.

As an embodiment, the first target domain set includes a PDCCH monitoring adaptation indication domain.

As an embodiment, one domain in the first target domain set is used to indicate a frequency domain resource allocation.

As an embodiment, one domain in the first target domain set is used to indicate a time domain resource allocation.

As an embodiment, one domain in the first target domain set is used to indicate whether the frequency hopping is or is not.

As an embodiment, one domain in the first target domain set is used to indicate a Modulation and coding scheme (MCS).

As an embodiment, one domain in the first target domain set is used to indicate the Hybrid automatic repeat request (HARQ) process number.

As an embodiment, one domain in the first target domain set is used to determine the transmission power of PUSCH.

As an embodiment, one domain in the first target domain set is used to indicate a Sounding reference signal (SRS) resource.

As an embodiment, one domain in the first target domain set is used to indicate a SRS resource set.

As an embodiment, one domain in the first target domain set is used to indicate at least one of the pre-coded information or the number of transmission layers.

As an embodiment, one domain in the first target domain set is used to indicate Antenna ports.

As an embodiment, one domain in the first target domain set is used to indicate information related to the CSI report.

As an embodiment, one domain in the first target domain set is used to indicate that Code block group (CBG) is transmission information.

As an embodiment, one domain in the first target domain set is used to indicate an association between PTRS and DMRS.

As an embodiment, one domain in the first target domain set is used to indicate a beta_offset value.

As an embodiment, the value of one domain of the first target domain sets is used for generation of the Demodulation reference signals (DMRS) sequence.

As an embodiment, one domain in the first target domain set is used for information indicating SCell dormancy.

As an embodiment, one domain in the first target domain set is used to indicate a transmission waveform of PUSCH.

As an embodiment, one domain in the first target domain set is used to indicate whether to enable Transform precoding.

As an embodiment, one domain in the first target domain set is used to trigger an aperiodic SRS resource set.

As an embodiment, one domain in the first target domain set is used to indicate an available slot offset.

As an embodiment, one domain in the first target domain set is used to indicate if UL-SCH is being transmitted at PUSCH.

As an embodiment, one domain in the first target domain set is used to indicate an open-loop power control parameter set.

As an embodiment, one domain in the first target domain set is used to indicate a priority.

As an embodiment, one domain in the first target domain set is used to indicate an invalid symbol pattern. As an embodiment, one domain in the first target domain set is used to indicate a minimum applicable scheduling offset.

As an embodiment, one domain in the first target domain set is used to indicate a skipping of PDCCH monitoring.

As an embodiment, one of the cells in the present application is a servicing cell.

As an embodiment, one of the cells in the present application is a configurable cell.

As an embodiment, the first DCI includes the first target domain set.

As an embodiment, the first target domain set in the first DCI is applied to the target cell set.

As an embodiment, the first target domain set in the first DCI is applied to each of the target cell sets.

As an embodiment, the first target domain set in the first DCI is applied to the transmission of PUSCH on each cell of the target cell set.

As an embodiment, the first target domain set in the first DCI is applied to the transmission of a Reference signal(s) corresponding to PUSCH on each cell of the target cell set.

As an embodiment, the first target domain set in the first DCI is applied to a plurality of cells in the target cell set.

As an embodiment, the first target domain set in the first DCI is applied to each of a plurality of cells in the target cell set.

As an embodiment, the first target domain set in the first DCI is applied to the transmission of PUSCH on each of a plurality of cells in the target cell set.

As an embodiment, the first target domain set in the first DCI is applied to the transmission of a Reference signal(s) corresponding to a PUSCH on each of a plurality of cells in the target cell set.

As an embodiment, a plurality of cells in the target cell set are the target cell set itself.

As an embodiment, a plurality of cells in the target cell set is a subset of the target cell set.

As an embodiment, the first target domain set expressing the first DCI is applied to a plurality of cells in the target cell set, comprising: The first target domain set in the first DCI is used for PUSCH transmission on each of a plurality of cells in the target cell set.

As an embodiment, the first target domain set expressing the first DCI is applied to a plurality of cells in the target cell set, comprising: The first target domain set in the first DCI includes scheduling information for PUSCH sent on a plurality of cells in the target cell set.

As an embodiment, the first target domain set expressing the first DCI is applied to a plurality of cells in the target cell set, comprising: The first target domain set in the first DCI includes associated indicator information for PUSCH sent on all of a plurality of cells in the target cell set.

As an embodiment, the first target domain set expressing the first DCI is applied to a plurality of cells in the target cell set, comprising: The first target domain set in the first DCI includes scheduling information for PUSCH sent on all of a plurality of cells in the target cell set.

As an embodiment, the first target domain set expressing the first DCI is applied to a plurality of cells in the target cell set, comprising: The first target domain set in the first DCI includes indication information for all of a plurality of cells in the target cell set.

As an embodiment, the first target domain set expressing the first DCI is applied to a plurality of cells in the target cell set, comprising: The first target domain set in the first DCI includes an indication information for sending PUSCH on a plurality of cells in the target cell set.

As an embodiment, the first target domain set expressing the first DCI is applied to a plurality of cells in the target cell set, comprising: each of the first target domain sets in the first DCI includes indication information for all of a plurality of cells in the target cell set.

As an embodiment, the first target domain set expressing the first DCI is applied to a plurality of cells in the target cell set, comprising: each of the first target domain sets in the first DCI includes an indication information of a PUSCH sent for all of a plurality of cells in the target cell set.

As an embodiment, the first target domain set expressing the first DCI is applied to a plurality of cells in the target cell set, comprising: Each of the first target domain sets in the first DCI is used to indicate scheduling information for PUSCH sent on all of a plurality of cells in the target cell set.

As an embodiment, the first target domain set in the first DCI includes all of the domains in the first DCI.

As an embodiment, the first target domain set in the first DCI includes only part of the domain in the first DCI.

As an embodiment, the configuration that states that the first target domain set in the first DCI depends on at least one RRC signaling of a plurality of RRC signaling comprises: The size of one domain of the first target domain set in the first DCI depends on the configuration of at least one RRC signaling of a plurality of RRC signaling.

As an embodiment, the configuration that states that the first target domain set in the first DCI depends on at least one RRC signaling of a plurality of RRC signaling comprises: an indication of one domain of the first target domain set in the first DCI depends on the configuration of at least one RRC signaling of a plurality of RRC signaling.

As an embodiment, the configuration of the expression depends on at least one of a plurality of RRC signaling comprises: determined based on the configuration of at least one RRC signaling in a plurality of RRC signaling.

As an embodiment, the configuration of the expression depends on at least one of a plurality of RRC signaling comprises: determined based on an indication of the configuration of at least one RRC signaling in a plurality of RRC signaling.

As an embodiment, the configuration that states that the first target domain set in the first DCI depends on at least one RRC signaling of a plurality of RRC signaling comprises: At least one RRC signaling of a plurality of RRC signaling is used to determine the size of one domain of the first target domain set in the first DCI.

As an embodiment, the configuration that states that the first target domain set in the first DCI depends on at least one RRC signaling of a plurality of RRC signaling comprises: At least one RRC signaling of a plurality of RRC signaling is used to indicate the size of one of the first target domain set in the first DCI.

As an embodiment, the configuration that states that the first target domain set in the first DCI depends on at least one RRC signaling of a plurality of RRC signaling comprises: At least one RRC signaling of a plurality of RRC signaling is used to configure the size of one domain of the first target domain set in the first DCI.

As an embodiment, the configuration that states that the first target domain set in the first DCI depends on at least one RRC signaling of a plurality of RRC signaling comprises: An indication of one domain of the first target domain set in the first DCI depends on the configuration of at least one RRC signaling of a plurality of RRC signaling.

As an embodiment, the configuration that states that the first target domain set in the first DCI depends on at least one RRC signaling of a plurality of RRC signaling comprises: An indication of one domain of the first target domain set in the first DCI depends on the configuration of at least one RRC signaling of a plurality of RRC signaling.

As an embodiment, the configuration that states that the first target domain set in the first DCI depends on at least one RRC signaling of a plurality of RRC signaling comprises: The size of one domain of the first target domain set in the first DCI depends on the configuration of at least one RRC signaling of a plurality of RRC signaling.

As an embodiment, the configuration that states that the first target domain set in the first DCI depends on at least one RRC signaling of a plurality of RRC signaling comprises: An indication of one domain of the first target domain set in the first DCI is based on a table that depends on the configuration of at least one RRC signaling of a plurality of RRC signaling.

As an embodiment, the configuration that states that the first target domain set in the first DCI depends on at least one RRC signaling of a plurality of RRC signaling comprises: One domain in the first target domain set in the first DCI indicates one of a value ranges where at least one RRC signaling of a plurality of RRC signaling is used to configure this range of values.

As an embodiment, the configuration that states that the first target domain set in the first DCI depends on at least one RRC signaling of a plurality of RRC signaling comprises: The content indicated by one domain of the first target domain set in the first DCI is indicated by at least one RRC signaling of a plurality of RRC signaling.

As an embodiment, the configuration that states that the first target domain set in the first DCI depends on at least one RRC signaling of a plurality of RRC signaling comprises: The meaning of bits in one domain of the first target domain sets in the first DCI depends on the configuration of at least one RRC signaling of a plurality of RRC signaling.

As an embodiment, the configuration that states that the first target domain set in the first DCI depends on at least one RRC signaling of a plurality of RRC signaling comprises: The content indicated by the value of one domain of the first target domain set in the first DCI depends on the configuration of at least one RRC signaling of a plurality of RRC signaling.

As an embodiment, the configuration that states that the first target domain set in the first DCI depends on at least one RRC signaling of a plurality of RRC signaling comprises: At least one RRC signaling of a plurality of RRC signaling is used to configure what is indicated by the value of one domain of the first target domain set in the first DCI.

As an embodiment, the configuration that states that the first target domain set in the first DCI depends on at least one RRC signaling of a plurality of RRC signaling comprises: At least one RRC signaling of a plurality of RRC signaling is used to configure an indication of one domain in the first target domain set in the first DCI.

As an embodiment, the configuration of one RRC signaling comprises: the value indicated by this RRC signaling.

As an embodiment, the configuration of one RRC signaling comprises: the parameter value configured for this RRC signaling.

As an embodiment, the configuration of one RRC signaling comprises: the content included in this RRC signaling.

As an embodiment, the first node does not want any 2 of a plurality of RRC signaling to be configured as different RRC signaling.

As an embodiment, a plurality of RRC signaling belongs to a plurality of PUSCH-Configs, respectively.

As an embodiment, a plurality of RRC signaling is a plurality of PUSCH-Configs, respectively.

As an embodiment, a plurality of RRC signaling comprises a plurality of PUSCH-Configs, respectively.

As an embodiment, the name of each RRC signaling of a plurality of RRC signaling includes a PUSCH-Config.

As an embodiment, a plurality of RRC signaling belongs to a plurality of PUSCH-ConfigCommons, respectively.

As an embodiment, a plurality of RRC signaling is a plurality of PUSCH-ConfigCommons, respectively.

As an embodiment, a plurality of RRC signaling includes a plurality of PUSCH-ConfigCommons, respectively.

As an embodiment, a plurality of RRC signaling belongs to a plurality of PUSCH-ServingCellConfigs, respectively.

As an embodiment, a plurality of RRC signaling is a plurality of PUSCH-ServingCellConfigs, respectively.

As an embodiment, a plurality of RRC signaling includes a plurality of PUSCH-ServingCellConfigs, respectively.

As an embodiment, the name of each RRC signaling of a plurality of RRC signaling includes a PUSCH-ConfigCommon.

As an embodiment, the name of each RRC signaling of a plurality of RRC signaling includes a PUSCH-ServingCellConfig.

As an embodiment, the configuration of a plurality of RRC signaling is the same.

As an embodiment, the configuration of a plurality of RRC signaling is different.

As an embodiment, the first node receives the first DCI only when the configuration of a plurality of RRC signaling is the same.

As an embodiment, the first node performs coding against the first DCI only when the configuration of a plurality of RRC signaling is the same.

As an embodiment, the receiving end of the first DCI expects the configuration of a plurality of RRC signaling is the same.

### Embodiment 2

Embodiment 2 illustrates a schematic diagram of a network architecture according to the present application, as shown in FIG. 2.

FIG. 2 illustrates a network architecture 200 of 5G NR, an LTE (Long-Term Evolution) and LTE-A (Long-Term Evolution Advanced) system. The 5G NR or LTE network architecture 200 may be referred to as Evolved Packet System (EPS) 200 or some other suitable term. The EPS 200 may include one or more User Equipment (UE) 201, Next Generation Wireless Access Network (NG-RAN) 202, Evolved Packet Core (EPC)/5G-Core Network (5G-CN) 210, Home Subscriber Server (HSS) 220, and Internet service 230. The EPS may be interconnected with other access networks, but these entities/interfaces are not shown for simplicity. As shown, the EPS provides packet exchange services. However, it will be readily understood by those skilled in the art that various concepts presented throughout the present application can be extended to a network or other cellular network providing circuit switching services. NG-RAN comprises NR node B (gNB) 203 and other gNB204. The gNB 203 provides user and control plane protocol termination towards the UE 201. The gNB 203 may be connected to the other gNB 204 via an Xn interface (e.g., backhaul). The gNB203 may also be referred to as a base station, a base transceiver station, a radio base station, a radio transceiver, a transceiver function, a Base Service Set (BSS), an Extension Service Set (ESS), a Transmit Receiving Node (TRP), or some other suitable term. gNB203 provides access points to EPC/5G-CN 210 for UE201. Examples of UE201 include cellular phone, smart phone, Session Initiation Protocol (SIP) phone, laptop computer, Personal Digital Assistant (PDA), satellite radio, non-ground base station communication, satellite mobile communication, global positioning system, multimedia device, video device, digital audio player (e.g., MP3 player), camera, game console, drone, aircraft, narrowband Internet of Things device, machine type communication device, land vehicle, automobile, wearable device, or any other similar functional apparatuses. Those of ordinary skill in the art may also refer to the UE 201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handheld, an user agent, a mobile client, a client, or some other suitable term. gNB203 is connected to EPC/5G-CN 210 via the S1/NG interface. EPC/5G-CN 210 comprises Mobility Management Entity (MME)/Authentication Management Field (AMF)/User Plane Function (UPF) 211, other MME/AMF/UPF214, Service Gateway (S-GW) 212 and Packet Date Network Gateway (P-GW) 213. MME/AMF/UPF211 is a control node that processes signaling between UE201 and EPC/5G-CN 210. In general, MME/AMF/UPF211 provides carrier and connection management. All user Internet Protocol (IP) packages are transmitted via S-GW212 which is itself connected to P-GW213. The P-GW213 provides UE IP address assignment as well as other functions. The P-GW213 is connected to the Internet service 230. The Internet service 230 comprises an operator's corresponding Internet protocol service, which may include, inter alia, the Internet, an intranet, an IP Multimedia Subsystem (IMS), and a packet exchange streaming service.

As an embodiment, the UE201 corresponds to the first node in the present application.

As an embodiment, the UE201 is a device that supports one DCI to schedule PUSCH on a plurality of cells.

As an embodiment, the UE 201 corresponds to the second node in the present application.

As an embodiment, the gNB203 corresponds to the first node in the present application.

As an embodiment, the gNB 203 corresponds to the second node in the present application.

As an embodiment, the UE201 corresponds to the first node in the present application and the gNB203 corresponds to the second node in the present application.

As an embodiment, the gNB203 is a MarcoCellular base station.

As an embodiment, the gNB203 is a Micro Cell base station.

As an embodiment, the gNB203 is a PicoCell base station.

As an embodiment, the gNB203 is a Femtocell base station.

As an embodiment, the gNB203 is a base station device that supports large latency differences.

As an embodiment, the gNB203 is a flight platform device.

As an embodiment, the gNB203 is a satellite device.

As an embodiment, both the first node and second node in the present application correspond to the UE201, e.g., performing V2X communication between the first node and second node.

### Embodiment 3

Embodiment 3 illustrates a schematic diagram of an embodiment of a wireless protocol architecture for an user plane and a control plane, according to one embodiment of the present application, as shown in FIG. 3. FIG. 3 is a schematic diagram illustrating an embodiment of a radio protocol architecture for the user plane 350 and the control plane 300, and FIG. 3 shows, with three layers, a radio protocol architecture for the control plane 300 between a first communication node device (RSU in UE, gNB or V2X) and a second communication node device (RSU in gNB, UE or V2X): layers 1, 2 and 3. The layer 1 (L1 layer) is the lowest layer and implements various PHY (physical layer) signal processing functions. The L1 layer will be referred to herein as PHY 301. The layer 2 (L2 layer) 305 is over the PHY301 and is responsible for the link between the first communication node device and the second communication node device, and between two UEs through PHY301. The L2 layer 305 includes a MAC (Medium Access Control) sublayer 302, an RLC (Radio Link Control) sublayer 303, and a PDCP (Packet Data Convergence Protocol) sublayer 304, and these sublayers terminate at the second communication node device. The PDCP sublayer 304 provides multiplexes between different radio carriers and logical channels. The PDCP sublayer 304 also provides security by encrypting the data packet and inter-cell movement support for the first communication node device between the second communication node device. The RLC sublayer 303 provides segmentation and reassembly of the upper layer data packet, retransmission of the missing data packet, and reordering of the data packet to compensate for out-of-order reception due to HARQ. The MAC sublayer 302 provides multiplex between logical and transmission channels. The MAC sublayer 302 is also responsible for distributing various radio resources (e.g., resource blocks) in one cell between the first communication node devices. The MAC sublayer 302 is also responsible for HARQ operations. The RRC (Radio Resource Control) sublayer 306 in layer 3 (L3 layer) in the control plane 300 is responsible for obtaining the radio resources (i.e., radio carrier) and configuring the lower layer using RRC signaling between the second communication node device and the first communication node device. The radio protocol architecture of the user plane 350 includes a layer 1 (L1 layer) and a layer 2 (L2 layer). The radio protocol architecture for the first and second communication node devices in the user plane 350 for the physical layer 351, the PDCP sublayer 354 in the L2 layer 355, the RLC sublayer 353 in the L2 layer 355 and the MAC sublayer 352 in the L2 layer 355 is substantially the same as the corresponding layer and the sublayer in the control plane 300. However, the PDCP sublayer 354 also provides header compression for upper layer data packets to reduce radio transmission overhead. The L2 layer 355 in the user plane 350 also includes an SDAP (Service Data Adaption Protocol) sublayer 356 that is responsible for mapping between QoS streams and data radio bearer (DRB) to support diversity of the business. Although not shown, the first communication node device may have several upper layers over the L2 layer 355, including a network layer (e.g., an IP layer) that terminates at the P-GW on the network side and an application layer that terminates at the other end of the connection (e.g., a far-end UE, a server, etc.).

As an embodiment, the wireless protocol architecture in FIG. 3 applies to the first node in the present application.

As an embodiment, the wireless protocol architecture in FIG. 3 applies to the second node in the present application.

As an embodiment, one RRC signaling in the present application is generated at the RRC sublayer 306.

As an embodiment, the first DCI in the present application is generated at the PHY301.

As an embodiment, the PUSCH in the present application is generated at the PHY301.

As an embodiment, the PUSCH in the present application is generated at the PHY351.

### Embodiment 4

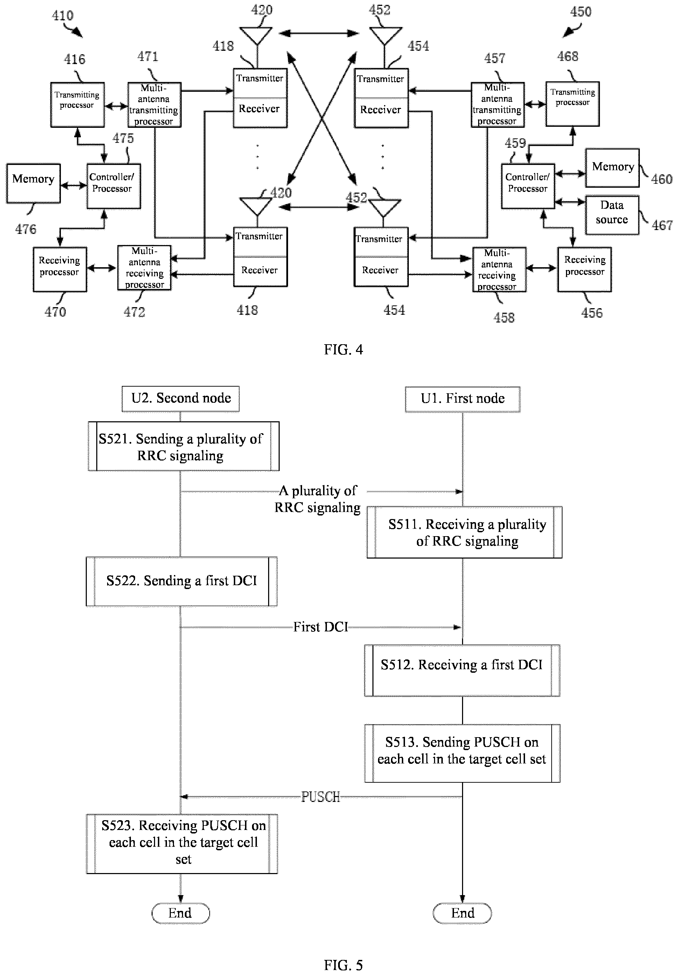

Embodiment 4 illustrates a schematic diagram of a first communication device and a second communication device according to the present application, as shown in FIG. 4. FIG. 4 is a block diagram of a first communications device 410 and a second communications device 450 in communication with one another over an access network.

The first communications device 410 includes the controller/processor 475, the memory 476, the receiving processor 470, the transmitting processor 416, the multi-antenna receiving processor 472, the multi-antenna transmitting processor 471, the transmitter/receiver 418, and the antenna 420.

The second communications device 450 includes the controller/processor 459, the memory 460, the data source 467, the transmitting processor 468, the receiving processor 456, the multi-antenna transmitting processor 457, the multi-antenna receiving processor 458, the transmitter/receiver 454, and the antenna 452.

In a transmission from the first communications device 410 to the second communications device 450, at the first communications device 410, an upper layer data packet from the core network is provided to the controller/processor 475. The controller/processor 475 implements the functionality of the L2 layer. In transmission from the first communication device 410 to the first communication device 450, the controller/processor 475 provides header compression, encryption, packet segmentation and reordering, multiplexing between logic and the transmission channel, and radio resource distribution to the second communication device 450 based on various priority measures. The controller/processor 475 is also responsible for the retransmission of the lost package and the signaling to the second communication device 450. The transmitting processor 416 and the multi-antenna transmitting processor 471 implement various signal processing functions for the L1 layer (i.e., the physical layer). The transmitting processor 416 implements coding and interleaving to facilitate forward error correction (FEC) at the second communication device 450 and mapping of signal clusters based on various modulation schemes (e.g., Binary Phase Shift Keying (BPSK), Quadrature Phase Shift Keying (QPSK), M-Phase Shift Keying (M-PSK), and M-Quadrature Amplitude Modulation (M-QAM)). The multi-antenna transmitting processor 471 pre-codes encoded and modulated symbols in digital space, including codebook-based pre-coding and non-codebook-based pre-coding, and beam-based processing, generating one or more spatial streams. The transmitting processor 416 then maps each spatial stream to a sub-carrier, multiplexing with a reference signal (e.g., a frequency director) in the time and/or frequency domain, and then used an Inverse Fast Fourier Transform (IFFT) to generate a physical channel of the time domain multi-wave symbol stream on the carrier. The multi-antenna transmitting processor 471 then sends the simulated pre-coding/beam-forming operation for the time domain multi-carrier symbol flow. Each transmitter 418 converts the baseband multi-carrier symbol flow provided by the multi-antenna transmitting processor 471 into a radio frequency flow, which is then provided to a different antenna 420.

In transmission from the first communications device 410 to the second communications device 450, at the second communications device 450, each receiver 454 receives a signal through its respective antenna 452. Each receiver 454 resumes information modulated onto a radio frequency carrier and converts the radio frequency flow into a baseband multi-carrier symbol flow to the receiving processor 456. The receiving processor 456 and the multi-antenna receiving processor 458 implement various signal processing functions of the L1 layer. The multi-antenna receiving processor 458 receives the simulated pre-coding/beam-forming operation for the baseband multi-carrier symbol flow from the receiver 454. The receiving processor 456 uses a Fast Fourier Transform (FFT) to transition the baseband multi-carrier symbol flow from the time domain to the frequency domain after receiving the simulated pre-coding/beam-forming operation. In the frequency domain, the physical layer data signal and the reference signal are demultiplexed by the receiving processor 456, where the reference signal is used for channel estimation and the data signal recovers any spatial stream to the second communication device 450 for destination after multi-antenna detection by the multi-antenna receiving processor 458. The symbols on each spatial stream are demodulated and restored in the receiving processor 456 and generate a soft decision. The receiving processor 456 then decodes and de-interleaves the soft decision to resume the upper layer data and control signal transmitted by the first communications device 410 over the physical channel. The upper layer data and control signal are then provided to the controller/processor 459. The controller/processor 459 implements the functions of the L2 layer. The controller/processor 459 may be associated with the memory 460 that stores program code and data. The memory 460 may be referred to as a computer-readable medium. In the transmission from the first communication device 410 to the second communication device 450, the controller/processor 459 provides multiplexing between the transmission and logical channel, packet reassembly, decryption, header decompression, control signal processing to recover the upper data packet from the core network. The upper layer data packet is then provided to all protocol layers above the L2 layer. Various control signals may also be provided to L3 for L3 processing.

In transmission from the second communications device 450 to the first communications device 410, at the second communications device 450, the data source 467 is used to provide the upper layer data packet to the controller/processor 459. The data source 467 represents all protocol layers above the L2 layer. Similar to the transmission function at the first communication device 410 described in the transmission from the first communication device 410 to the second communication device 450, the controller/processor 459 implements header compression, encryption, packet segmentation and reordering, and multiplexing between logic and transmission channels based on wireless resource allocation, implementing L2 layer functions for the user plane and control plane. The controller/processor 459 is also responsible for the retransmission of the lost package and the signaling to the first communication device 410. The transmitting processor 468 executes the modulation mapping, channel encoding, while the multi-antenna transmitting processor 457 performs digital multi-antenna spatial pre-coding, including both codebook-based pre-coding and non-codebook-based pre-coding, and beam-based processing, and then the transmitting processor 468 tailors the generated spatial stream to a multi-wave/single-wave symbol stream, which is provided to a different antenna 452 via the transmitter 454 after a simulated pre-encoded/beam operation in the multi-antenna transmitting processor 457. Each transmitter 454 first converts the baseband symbol flow provided by the multi-antenna transmitting processor 457 into a radio frequency symbol flow, which is then provided to the antenna 452.

In the transmission from the second communications device 450 to the first communications device 410, the function at the first communications device 410 is similar to the receiving function at the second communications device 450 described in the transmission from the first communications device 410 to the second communications device 450. Each receiver 418 receives a radio frequency signal through its respective antenna 420, converts the received radio frequency signal into a baseband signal, and provides the baseband signal to the multi-antenna receiving processor 472 and the receiving processor 470. The receiving processor 470 and the multi-antenna receiving processor 472 collectively implement the functions of the L1 layer. The controller/processor 475 implements the function of the L2 layer. The controller/processor 475 may be associated with the memory 476 storing program code and data. The memory 476 may be referred to as a computer-readable medium. In the transmission from the second communication device 450 to the first communication device 410, the controller/processor 475 provides multiplexing between the transmission and logical channel, packet reassembly, decryption, header decompression, control signal processing to recover the upper data packet from the UE450. The upper layer data packet from the controller/processor 475 may be provided to the core network.

As an embodiment, the first node in the present application includes the second communications device 450 and the second node in the present application includes the first communications device 410.

As a sub-embodiment of the above embodiment, the first node is an user equipment and the second node is an user equipment.

As a sub-embodiment of the above embodiment, the first node is an user equipment and the second node is a relay node.

As a sub-embodiment of the above embodiment, the first node is a relay node and the second node is an user equipment.

As a sub-embodiment of the above embodiment, the first node is an user equipment and the second node is a base station device.

As a sub-embodiment of the above embodiment, the first node is a relay node and the second node is a base station device.

As a sub-embodiment of the above embodiment, the second node is an user equipment and the first node is a base station device.

As a sub-embodiment of the above embodiment, the second node is a relay node and the first node is a base station device.

As a sub-embodiment of the above embodiment, the second communications device 450 comprises: at least one controller/processor; at least one controller/processor is responsible for HARQ operation.

As a sub-embodiment of the above embodiment, the first communications device 410 comprises: at least one controller/processor; at least one controller/processor is responsible for HARQ operation.

As a sub-embodiment of the above embodiment, the first communications device 410 comprises: at least one controller/processor; at least one controller/processor is responsible for error detection using an Affirmative Confirmation (ACK) and/or a Negative Confirmation (NACK) protocol to support HARQ operations.

As an embodiment, the second communications device 450 includes: at least one processor, and at least one memory comprising computer program code; at least one memory and computer program code configured for use with at least one processor. The second communications device 450 device at least: receiving a plurality of RRC signaling; receiving a first DCI, and the first DCI is used to schedule PUSCH on a target cell set, and the target cell set comprising a plurality of cells; sending a PUSCH on each cell of the target cell set; wherein the first target domain set in the first DCI is applied to a plurality of cells in the target cell set; the first target domain set in the first DCI depends on the configuration of at least one RRC signaling in a plurality of RRC signaling, a plurality of RRC signaling are respectively configured for a plurality of cells in the target cell set, and the configurations of a plurality of RRC signaling are expected to be the same.

As a sub-embodiment of the above embodiment, the second communications device 450 corresponds to the first node in the present application.

As an embodiment, the second communications device 450 includes: a memory storing a computer-readable instruction program that, when executed by at least one processor, generates an action, the action comprising: receiving a plurality of RRC signaling; receiving a first DCI, and the first DCI is used to schedule PUSCH on a target cell set, and the target cell set comprising a plurality of cells; sending a PUSCH on each cell of the target cell set; wherein the first target domain set in the first DCI is applied to a plurality of cells in the target cell set; the first target domain set in the first DCI depends on the configuration of at least one RRC signaling in a plurality of RRC signaling, a plurality of RRC signaling are respectively configured for a plurality of cells in the target cell set, and the configurations of a plurality of RRC signaling are expected to be the same.

As a sub-embodiment of the above embodiment, the second communications device 450 corresponds to the first node in the present application.

As an embodiment, the first communications device 410 includes: at least one processor, and at least one memory comprising computer program code; at least one memory and computer program code configured for use with at least one processor. The first communications device 410 device at least: sending a plurality of RRC signaling; sending a first DCI, and the first DCI is used to schedule PUSCH on a target cell set, and the target cell set comprising a plurality of cells; receiving a PUSCH on each cell of the target cell set; wherein the first target domain set in the first DCI is applied to a plurality of cells in the target cell set; the first target domain set in the first DCI depends on the configuration of at least one RRC signaling in a plurality of RRC signaling, a plurality of RRC signaling are respectively configured for a plurality of cells in the target cell set, and the configurations of a plurality of RRC signaling are expected to be the same.

As an embodiment, the first communications device 410 includes: a memory storing a computer-readable instruction program that, when executed by at least one processor, generates an action, the action comprising: sending a plurality of RRC signaling; sending a first DCI, and the first DCI is used to schedule PUSCH on a target cell set, and the target cell set comprising a plurality of cells; receiving a PUSCH on each cell of the target cell set; wherein the first target domain set in the first DCI is applied to a plurality of cells in the target cell set; the first target domain set in the first DCI depends on the configuration of at least one RRC signaling in a plurality of RRC signaling, a plurality of RRC signaling are respectively configured for a plurality of cells in the target cell set, and the configurations of a plurality of RRC signaling are expected to be the same.

As a sub-embodiment of the above embodiment, the first communications device 410 corresponds to the second node in the present application.

As an embodiment, at least one of {the antenna 452, the receiver 454, the multi-antenna receiving processor 458, the receiving processor 456, the controller/processor 459, the memory 460, the data source 467} is used to receive RRC signaling in the present application.

As an embodiment, at least one of {the antenna 420, the transmitter 418, the multi-antenna emitting processor 471, the emitting processor 416, the controller/processor 475, the memory 476} is used to transmit one RRC signaling in the present application.

As an embodiment, at least one of {the antenna 452, the receiver 454, the multi-antenna receiving processor 458, the receiving processor 456, the controller/processor 459, the memory 460, the data source 467} is used to receive the first DCI in the present application.

As an embodiment, at least one of {the antenna 420, the transmitter 418, the multi-antenna emitting processor 471, the emitting processor 416, the controller/processor 475, the memory 476} is used to send the first DCI of the present application.

As an embodiment, at least one of {the antenna 452, the transmitter 454, the multi-antenna emitting processor 458, the emitting processor 468, the controller/processor 459, the memory 460, the data source 467} is used to transmit PUSCH on each of the cell in the target cell set in the present application.

As an embodiment, at least one of {the antenna 420, the receiver 418, the multi-antenna receiving processor 472, the receiving processor 470, the controller/processor 475, the memory 476} is used to receive PUSCH on each of the target cells in the target cell set in the present application.

### Embodiment 5

Embodiment 5 exemplifies a flow diagram of wireless transmission according to one embodiment of the present application, as shown in FIG. 5. In FIG. 5, the communication between the first node U1 and the second node U2 is via an air interface.

The first node U1 receives a plurality of RRC signaling in step S511; receives a first DCI in step S512; and sends PUSCH on each cell in the target cell set in step S513.

The second node, U2, sends a plurality of RRC signaling in step S521, a first DCI in step S522, and a PUSCH is received on each cell in the target cell set in step S523.

In Embodiment 5, the first DCI is used to schedule the PUSCH on the target cell set, and the target cell set comprising a plurality of cells; the first target domain set in the first DCI is applied to a plurality of cells in the target cell set; the first target domain set in the first DCI depends on the configuration of at least one RRC signaling in a plurality of RRC signaling, a plurality of RRC signaling are configured for a plurality of cells in the target cell set, respectively, and the configurations of a plurality of RRC signaling are expected to be the same; a plurality of RRC signaling belong to a plurality of PUSCH-Configs, respectively.

As a sub-embodiment of Embodiment 5, the size of one domain in the first target domain set in the first DCI depends on the configuration of at least one RRC signaling in a plurality of RRC signaling.

As a sub-embodiment of Embodiment 5, an indication of one domain in the first target domain set in the first DCI depends on the configuration of at least one RRC signaling of a plurality of RRC signaling.

As a sub-embodiment of Embodiment 5, the first node U1 also receives first RRC signaling and second RRC signaling; the first node U2 also sends first RRC signaling and second RRC signaling; wherein the first DCI comprises a second target domain set, the second target domain set in the first DCI is applied to a plurality of cells in the target cell set; a plurality of cells in the target cell set comprises first cell and second cell, the first RRC signaling and the second RRC signaling is configured to the first cell and the second cell, respectively, and the configuration of the first RRC signaling is different from the configuration of the second RRC signaling; for the first cell, the indication of one domain of the second target domain set in the first DCI depends on the configuration of the first RRC signaling; for the second cell, the indication of the domain of the second target domain set in the first DCI depends on the configuration of the second RRC signaling.

As an embodiment, the first node U1 is the first node in the present application.

As an embodiment, the second node U2 is the second node in the present application.

As an embodiment, the first node U1 is a UE.

As an embodiment, the first node U1 is a base station.

As an embodiment, the second node U2 is a base station.

As an embodiment, the second node U2 is a UE.

As an embodiment, the air interface between the second node U2 and the first node U1 is a Uu interface.

As an embodiment, the air interface between the second node U2 and the first node U1 includes a cellular link.

As an embodiment, the air interface between the second node U2 and the first node U1 is a PC5 interface.

As an embodiment, the air interface between the second node U2 and the first node U1 includes a sidelink.

As an embodiment, the air interface between the second node U2 and the first node U1 includes a wireless interface between a base station device and an user equipment.

As an embodiment, the air interface between the second node U2 and the first node U1 includes a wireless interface between the satellite device and an user equipment.

As an embodiment, the air interface between the second node U2 and the first node U1 includes a wireless interface between an user equipment and the user equipment.

As an embodiment, issues to be addressed by the present application include: how to determine a relationship between the first target domain set in the first DCI and a plurality of RRC signaling.

As an embodiment, issues to be addressed by the present application include: how to determine a relationship between the first target domain set in the first DCI and a plurality of RRC signaling, as well as the relationship among a plurality of RRC signaling.

As an embodiment, issues to be addressed by the present application include: how to interpret the first target domain set in the first DCI.

As an embodiment, issues to be addressed by the present application include: how to determine the size of the domain in the first target domain set in the first DCI.

As an embodiment, issues to be addressed by the present application include: an indication of how to interpret a domain of the first target domain set in the first DCI.

As an embodiment, issues to be addressed by the present application include: how to determine the configuration of relevant RRC signaling for DCI that schedule a plurality of cells.

As an embodiment, issues to be addressed by the present application include: how to avoid ambiguity in the interpretation of DCI.

As an embodiment, issues to be addressed by the present application include: how to improve uplink transmission performance.

As an embodiment, issues to be addressed by the present application include: how to reduce the signaling overhead of DCI.

As an embodiment, issues to be addressed by the present application include: how to improve the performance of eMBB.

As an embodiment, issues to be addressed by the present application include: how to improve the performance of URLLC.

As an embodiment, issues to be addressed by the present application include: how to improve the performance of the Vehicle-to-Everything.

As an embodiment, issues to be addressed by the present application include: how to improve the performance of MBS.

As an embodiment, issues to be addressed by the present application include: how to improve the performance of XR.

As an embodiment, issues to be addressed by the present application include: how to improve the performance of NTN.

As an embodiment, issues to be addressed by the present application include: how to increase flexibility in base station scheduling or configuration.

### Embodiment 6

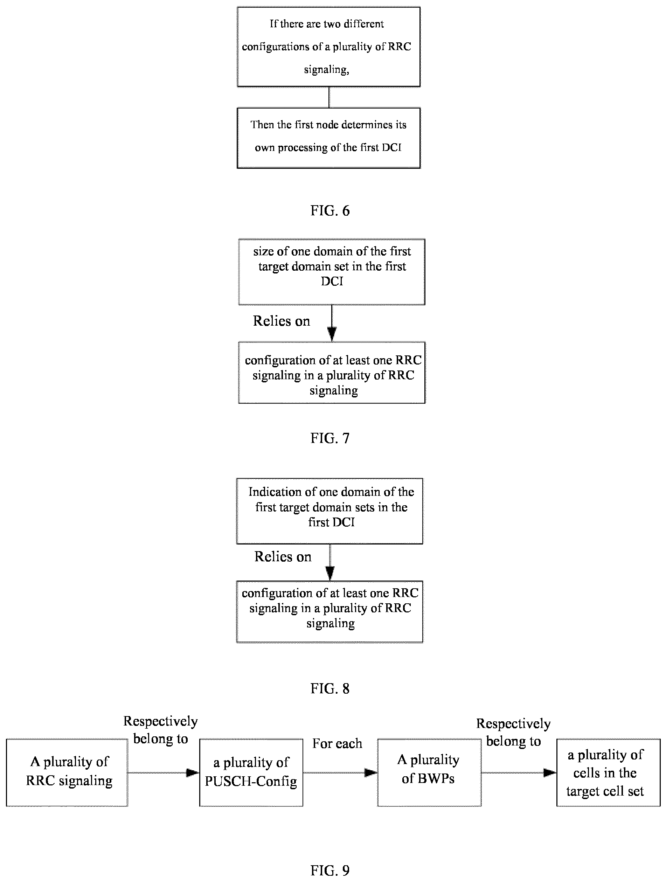

Embodiment 6 exemplifies a schematic diagram of the presence of two different configurations of a plurality of RRC signaling according to one embodiment of the present application, as shown in FIG. 6.

In Embodiment 6, if there are two different configurations of a plurality of RRC signaling, the first node determines its own processing of the first DCI.

As an embodiment, the first node discards processing of the first DCI if there are two different configurations of a plurality of RRC signaling.

As an embodiment, the first node processes the first DCI according to predefined rules if there are two different configurations of a plurality of RRC signaling.

As an embodiment, the processing of the first DCI by the first node depends on UE implementation if there are two different configurations of a plurality of RRC signaling.

As an embodiment, the first node processes the first target domain set in the first DCI according to predefined rules if the configuration of a plurality of RRC signaling is different from each other.

As an embodiment, the processing of the first node for the first target domain set in the first DCI depends on UE implementation if the configuration of a plurality of RRC signaling differs from one another.

As an embodiment, the first node believes that the existence of two different configurations of a plurality of RRC signaling is an error situation.

As an embodiment, the first node does not perform a decoding for the first DCI if there are two different configurations of a plurality of RRC signaling.

### Embodiment 7

Embodiment 7 exemplifies a schematic diagram of the relationship between a plurality of RRC signaling and a first target domain set in a first DCI according to one embodiment of the present application, as shown in FIG. 7.

In Embodiment 7, the size of one domain of the first target domain set in the first DCI depends on the configuration of at least one RRC signaling in a plurality of RRC signaling.

As an embodiment, the size of one domain of the first target domain set in the first DCI is equal to a non-negative integer.

As an embodiment, the size of one domain of the first target domain set in the first DCI is equal to 0 or a positive integer.

As an embodiment, the first DCI does not include the domain in the first target domain set when the size of the domain in the first target domain set is equal to 0.

As an embodiment, the size of one domain of the first target domain set in the first DCI is equal to a positive integer.

As an embodiment, in the present application, the size of a domain refers to the number of bits included in the domain.

As an embodiment, at least one RRC signaling of a plurality of RRC signaling is used to determine the size of one domain of the first target domain set in the first DCI.

As an embodiment, at least one RRC signaling of a plurality of RRC signaling is used to indicate the size of one domain of the first target domain set in the first DCI.

As an embodiment, at least one RRC signaling in a plurality of RRC signaling is used to configure the size of one domain of the first target domain set in the first DCI.

### Embodiment 8

Embodiment 8 exemplifies a schematic diagram of the relationship between a plurality of RRC signaling and a first target domain set in a first DCI according to one embodiment of the present application, as shown in FIG. 8.

In Embodiment 8, the size of one domain of the first target domain set in the first DCI depends on the configuration of at least one RRC signaling in a plurality of RRC signaling.

As an embodiment, an indication of one domain of the first target domain set in the first DCI comprises: an indication of one domain of the first target domain set in the first DCI for a time domain resource.

As an embodiment, an indication of one domain of the first target domain set in the first DCI comprises: an indication of one domain of the first target domain set in the first DCI for a frequency domain resource.

As an embodiment, an indication of one domain of the first target domain set in the first DCI comprises: an indication of whether the domain of the first target domain set in the first DCI is a frequency hopping.

As an embodiment, an indication of one domain of the first target domain set in the first DCI comprises: an indication of the domain of the first target domain set in the first DCI for a MCS.

As an embodiment, an indication of one domain of the first target domain set in the first DCI comprises: an indication of the domain of the first target domain set in the first DCI for a HARQ process number.

As an embodiment, an indication of one domain of the first target domain set in the first DCI comprises: an indication of the domain of the first target domain set in the first DCI for power control-related parameters of the PUSCH.

As an embodiment, an indication of one domain of the first target domain set in the first DCI comprises: an indication of the domain of the first target domain set in the first DCI for an SRS resource.

As an embodiment, an indication of one domain of the first target domain set in the first DCI comprises: an indication of the domain of the first target domain set in the first DCI for an SRS resource set.

As an embodiment, an indication of one domain of the first target domain set in the first DCI comprises: The domain of the first target domain set in the first DCI is for an indication of at least one of the pre-coding information or the number of transmission layers.

As an embodiment, an indication of one domain of the first target domain set in the first DCI comprises: an indication of the domain of the first target domain set in the first DCI for an Antenna ports.

As an embodiment, an indication of one domain of the first target domain set in the first DCI comprises: an indication of the domain of the first target domain set in the first DCI for information related to the CSI report.

As an embodiment, an indication of one domain of the first target domain set in the first DCI comprises: an indication that the domain of the first target domain set in the first DCI transmission information for CBG.

As an embodiment, an indication of one domain of the first target domain set in the first DCI comprises: an indication of the domain of the first target domain set in the first DCI for an association between PTRS and DMRS.

As an embodiment, an indication of one domain of the first target domain set in the first DCI comprises: an indication of the domain of the first target domain set in the first DCI for a beta_offset value.

As an embodiment, an indication of one domain of the first target domain set in the first DCI comprises: an indication of relevant information generated by the domain of the first target domain set in the first DCI for the DMRS sequence.

As an embodiment, an indication of one domain of the first target domain set in the first DCI comprises: an indication of the domain of the first target domain set in the first DCI for information that the SCell dormancy.

As an embodiment, an indication of one domain of the first target domain set in the first DCI comprises: an indication that the domain of the first target domain set in the first DCI sends a waveform for PUSCH.

As an embodiment, an indication of one domain of the first target domain set in the first DCI comprises: an indication of the domain of the first target domain set in the first DCI for whether to enable Transform precoding.

As an embodiment, the indication of one domain of the first target domain set in the first DCI depends on the configuration of at least one RRC signaling of a plurality of RRC signaling.

As an embodiment, the indication of one domain of the first target domain set in the first DCI depends on the configuration of at least one RRC signaling of a plurality of RRC signaling.

As an embodiment, the indication of one domain of the first target domain sets in the first DCI is based on a table that depends on the configuration of at least one RRC signaling of a plurality of RRC signaling.

As an embodiment, one domain in the first target domain set in the first DCI indicates one of a value range for which at least one RRC signaling of a plurality of RRC signaling is used to configure this numerical range.

As an embodiment, the content indicated by one domain of the first target domain set in the first DCI is indicated by at least one RRC signaling of a plurality of RRC signaling.

As an embodiment, the meaning of bits in one domain of the first target domain sets in the first DCI depends on the configuration of at least one RRC signaling of a plurality of RRC signaling.

As an embodiment, the content indicated by the value of one domain of the first target domain sets in the first DCI depends on the configuration of at least one RRC signaling of a plurality of RRC signaling.

As an embodiment, at least one RRC signaling of a plurality of RRC signaling is used to configure what is indicated by the value of one of the first target domain sets in the first DCI.

As an embodiment, at least one RRC signaling of a plurality of RRC signaling is used to configure an indication of one domain of the first target domain sets in the first DCI.

### Embodiment 9

Embodiment 9 exemplifies a schematic diagram of a plurality of RRC signaling according to one embodiment of the present application, as shown in FIG. 9.

In Embodiment 9, a plurality of RRC signaling belonged to a plurality of PUSCH-Configs, and a plurality of PUSCH-Configs are configured for a plurality of Bandwidth parts (BWPs), respectively, and a plurality of BWPs belonged to a plurality of cells in the target cell set, respectively.

As an embodiment, a plurality of RRC signaling belongs to a plurality of PUSCH-ConfigCommons, and a plurality of PUSCH-ConfigCommons are configured for a plurality of cells in the target cell set, respectively.

As an embodiment, a plurality of RRC signaling belongs to a plurality of PUSCH-ServingCellConfigs, which are configured for a plurality of cells in the target cell set, respectively.

### Embodiment 10

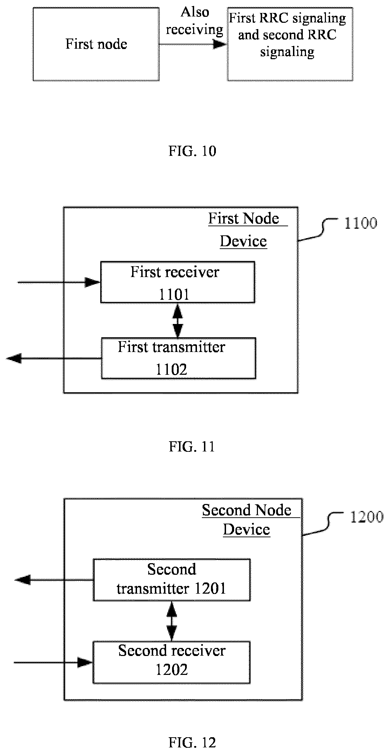

Embodiment 10 exemplifies a schematic diagram of signaling reception for a first node according to one embodiment of the present application, as shown in FIG. 10.

In Embodiment 10, the first node in the present application further receives first and second RRC signaling.

In Embodiment 10, the first DCI comprises a second target domain set, the second target domain set in the first DCI is applied to a plurality of cells in the target cell set; a plurality of cells in the target cell set comprises first cell and second cell, the first RRC signaling and the second RRC signaling is configured to the first cell and the second cell, respectively, and the configuration of the first RRC signaling is different from the configuration of the second RRC signaling; for the first cell, the indication of a domain of the second target domain set in the first DCI depends on the configuration of the first RRC signaling; for the second cell, the indication of the domain of the second target domain set in the first DCI depends on the configuration of the second RRC signaling.

As an embodiment, the first RRC signaling is received after the second RRC signaling.

As an embodiment, the first RRC signaling is received prior to the second RRC signaling.

As an embodiment, the first RRC signaling and the second RRC signaling are received simultaneously.

As an embodiment, both the first RRC signaling and the second RRC signaling are received prior to the first DCI.

As an embodiment, the first RRC signaling is received after at least one RRC signaling of a plurality of RRC signaling.

As an embodiment, the first RRC signaling is received prior to at least one RRC signaling of a plurality of RRC signaling.

As an embodiment, at least one RRC signaling of the first RRC signaling and a plurality of RRC signaling is received simultaneously.

As an embodiment, the second RRC signaling is received after at least one RRC signaling of a plurality of RRC signaling.

As an embodiment, the second RRC signaling is received prior to at least one RRC signaling of a plurality of RRC signaling.

As an embodiment, at least one RRC signaling of the second RRC signaling and a plurality of RRC signaling is received simultaneously.

As an embodiment, a plurality of RRC signaling is received simultaneously.

As an embodiment, two RRC signaling in a plurality of RRC signaling that are received in sequence.

As an embodiment, the first RRC signaling does not belong to a plurality of RRC signaling.

As an embodiment, the second RRC signaling does not belong to a plurality of RRC signaling.

As an embodiment, only one of a first RRC signaling and a second RRC signaling belongs to a plurality of RRC signaling.

As an embodiment, the second target domain set is not intersected with the second target domain set.

As an embodiment, the second target domain set includes only one domain.

As an embodiment, the second target domain set includes a plurality of domains.

As an embodiment, one domain of the second target domain set includes at least one bit.

As an embodiment, one domain of the second target domain set includes non-negative integer bits.

As an embodiment, the second target domain set includes a Frequency domain resource assignment domain.

As an embodiment, the second target domain set includes a Time domain resource assignment domain.

As an embodiment, the second target domain set includes a Frequency hopping flag domain.

As an embodiment, the second target domain set includes a Modulation and coding scheme domain.

As an embodiment, the second target domain set includes a HARQ process number domain.

As an embodiment, the second target domain set includes a Second TPC command for scheduled PUSCH domain for PUSCH.

As an embodiment, the second target domain set includes a SRS resource indicator domain.

As an embodiment, the second target domain set includes a SRS resource set indicator domain.

As an embodiment, the second target domain set includes a second SRS resource indicator domain.

As an embodiment, the second target domain set includes a Pre-coding information and number of layers domain.

As an embodiment, the second target domain set includes a Second pre-coding information domain.

As an embodiment, the second target domain set includes an Antenna ports domain.

As an embodiment, the second target domain set includes a CSI request domain.

As an embodiment, the second target domain set includes a SRS request domain.

As an embodiment, the second target domain set includes a SRS offset indicator domain.

As an embodiment, the second target domain set includes a CBG transmission information (CBGTI) domain.

As an embodiment, the second target domain set includes a PTRS-DMRS association domain.

As an embodiment, the second target domain set includes a Second PTRS-DMRS association domain.

As an embodiment, the second target domain set includes a beta_offset indicator domain.

As an embodiment, the second target domain set includes a DMRS sequence initialization domain.

As an embodiment, the second target domain set includes a UL-SCH indicator domain.

As an embodiment, the second target domain set includes a ChannelAccess-CPext-CAPC domain.

As an embodiment, the second target domain set includes an Open-loop power control parameter set indication domain.

As an embodiment, the second target domain set includes a SCell dormancy indication domain.

As an embodiment, the second target domain set includes a Priority indicator domain.

As an embodiment, the second target domain set includes an Invalid symbol pattern indicator domain.

As an embodiment, the second target domain set includes a Minimum applicable scheduling offset indicator domain.

As an embodiment, the second target domain set includes a PDCCH monitoring adaptation indication domain.

As an embodiment, one domain in the second target domain set is used to indicate a frequency domain resource allocation.

As an embodiment, one domain in the second target domain set is used to indicate a time domain resource allocation.

As an embodiment, one domain in the second target domain set is used to indicate whether the frequency hopping or not.

As an embodiment, one domain in the second target domain set is used to indicate the Modulation and coding scheme (MCS).

As an embodiment, one domain in the second target domain set is used to indicate the Hybrid automatic repeat request (HARQ) Process Number.

As an embodiment, one domain in the second target domain set is used to determine the transmission power of PUSCH.

As an embodiment, one domain in the second target domain set is used to indicate a Sounding reference signal (SRS) resource.

As an embodiment, one domain in the second target domain set is used to indicate SRS resource set.

As an embodiment, one domain in the second target domain set is used to indicate at least one of the pre-coded information or the number of transmission layers.

As an embodiment, one domain in the second target domain set is used to indicate Antenna ports.

As an embodiment, one domain in the second target domain set is used to indicate information related to the CSI report.

As an embodiment, one domain in the second target domain set is used to indicate that Code block group (CBG) is transmission information.

As an embodiment, one domain in the second target domain set is used to indicate an association between PTRS and DMRS.

As an embodiment, one domain in the second target domain set is used to indicate a beta_offset value.

As an embodiment, the value of one domain in the second target domain sets is used for generation of the Demodulation reference signals (DMRS) sequence.

As an embodiment, one domain in the second target domain set is used as a message indicating SCell dormancy.

As an embodiment, one domain in the second target domain set is used to indicate a transmission waveform of PUSCH.

As an embodiment, one domain in the second target domain set is used to indicate whether to enable Transform precoding.

As an embodiment, one domain in the second target domain set is used to trigger an aperiodic SRS resource set.

As an embodiment, one domain in the second target domain set is used to indicate an available slot offset.

As an embodiment, one domain in the second target domain set is used to indicate whether UL-SCH is being transmitted at PUSCH.

As an embodiment, one domain in the second target domain set is used to indicate an open loop power control parameter set.

As an embodiment, one domain in the second target domain set is used to indicate a priority.

As an embodiment, one domain in the second target domain set is used to indicate an invalid symbol pattern. As an embodiment, one domain in the second target domain set is used to indicate a minimum applicable scheduling offset.

As an embodiment, one domain in the second target domain set is used to indicate a skipping of PDCCH monitoring.

As an embodiment, the second target domain set in the first DCI is applied to the target cell set.

As an embodiment, the second target domain set in the first DCI is applied to each cell of the target cell set.

As an embodiment, the second target domain set in the first DCI is applied to the transmission of PUSCH on each cell of the target cell set.

As an embodiment, the second target domain set in the first DCI is applied to the transmission of a Reference signal(s) corresponding to PUSCH on each cell of the target cell set.

As an embodiment, the second target domain set in the first DCI is applied to a plurality of cells in the target cell set.

As an embodiment, the second target domain set in the first DCI is applied to each of a plurality of cells in the target cell set.

As an embodiment, the second target domain set in the first DCI is applied to the transmission of PUSCH on each of a plurality of cells in the target cell set.

As an embodiment, the second target domain set in the first DCI is applied to the transmission of a Reference signal(s) corresponding to PUSCH in each of a plurality of cells in the target cell set.

As an embodiment, the second target domain set expressing the first DCI is applied to a plurality of cells in the target cell set, comprising: The second target domain set in the first DCI is used for PUSCH transmission on each of a plurality of cells in the target cell set.

As an embodiment, the second target domain set expressing the first DCI is applied to a plurality of cells in the target cell set, comprising: The second target domain set in the first DCI includes scheduling information for PUSCH sent on a plurality of cells in the target cell set.

As an embodiment, the second target domain set expressing the first DCI is applied to a plurality of cells in the target cell set, comprising: The second target domain set in the first DCI includes associated indicator information for PUSCH sent on all of a plurality of cells in the target cell set.

As an embodiment, the second target domain set expressing the first DCI is applied to a plurality of cells in the target cell set, comprising: The second target domain set in the first DCI includes scheduling information for PUSCH sent on all of a plurality of cells in the target cell set.

As an embodiment, the second target domain set expressing the first DCI is applied to a plurality of cells in the target cell set, comprising: The second target domain set in the first DCI includes an indication information for all of a plurality of cells in the target cell set.

As an embodiment, the second target domain set expressing the first DCI is applied to a plurality of cells in the target cell set, comprising: The second target domain set in the first DCI includes an indication information for sending PUSCH on a plurality of cells in the target cell set.

As an embodiment, the second target domain set expressing the first DCI is applied to a plurality of cells in the target cell set, comprising: each of the second target domain set in the first DCI includes an indication information for all of a plurality of cells in the target cell set.

As an embodiment, the second target domain set expressing the first DCI is applied to a plurality of cells in the target cell set, comprising: each of the second target domain set in the first DCI includes an indication information of PUSCH sent for all of a plurality of cells in the target cell set.

As an embodiment, the second target domain set expressing the first DCI is applied to a plurality of cells in the target cell set, comprising: each domain of the second target domain set in the first DCI is used to indicate scheduling information for PUSCH sent on all of a plurality of cells in the target cell set.

As an embodiment, the second target domain set in the first DCI includes only part of the domain in the first DCI.

As an embodiment, an indication of one domain of the second target domain set in the first DCI comprises: an indication of the domain of the second target domain set in the first DCI for a time domain resource.

As an embodiment, an indication of one domain of the second target domain set in the first DCI comprises: an indication of the domain of the second target domain set in the first DCI for a frequency domain resource.

As an embodiment, an indication of one domain of the second target domain set in the first DCI comprises: an indication of whether the domain of the second target domain set in the first DCI is a frequency hopping.

As an embodiment, an indication of one domain of the second target domain set in the first DCI comprises: an indication of the domain of the second target domain set in the first DCI for a MCS.

As an embodiment, an indication of one domain of the second target domain set in the first DCI comprises: an indication of the domain of the second target domain set in the first DCI for a HARQ Process Number.

As an embodiment, an indication of one domain of the second target domain set in the first DCI comprises: an indication of the domain of the second target domain set in the first DCI for power control-related parameters of the PUSCH.

As an embodiment, an indication of one domain of the second target domain set in the first DCI comprises: an indication of the domain of the second target domain set in the first DCI for an SRS resource.

As an embodiment, an indication of one domain of the second target domain set in the first DCI comprises: an indication of the domain of the second target domain set in the first DCI for an SRS resource set.

As an embodiment, an indication of one domain of the second target domain set in the first DCI comprises: an indication of the domain of the second target domain set in the first DCI for at least one of the pre-coding information or the number of transmission layers.

As an embodiment, an indication of one domain of the second target domain set in the first DCI comprises: an indication of the domain of the second target domain set in the first DCI for an Antenna ports.

As an embodiment, an indication of one domain of the second target domain set in the first DCI comprises: an indication of the domain of the second target domain set in the first DCI for information related to the CSI report.

As an embodiment, an indication of one domain of the second target domain set in the first DCI comprises: an indication that the domain of the second target domain set in the first DCI transmits information for the CBG.

As an embodiment, an indication of one domain of the second target domain set in the first DCI comprises: the indication of the domain of the second target domain set in the first DCI for an association between PTRS and DMRS.

As an embodiment, an indication of one domain of the second target domain set in the first DCI comprises: an indication of the domain of the second target domain set in the first DCI for a beta_offset value.

As an embodiment, an indication of one domain of the second target domain set in the first DCI comprises: an indication of relevant information generated by the domain of the second target domain set in the first DCI for the DMRS sequence.

As an embodiment, an indication of one domain of the second target domain set in the first DCI comprises: an indication of the domain of the second target domain set in the first DCI for information of the SCell dormancy.

As an embodiment, an indication of one domain of the second target domain set in the first DCI comprises: an indication that the domain of the second target domain set in the first DCI sends a waveform for PUSCH.

As an embodiment, an indication of one domain of the second target domain set in the first DCI comprises: an indication of the domain of the second target domain set in the first DCI of whether to enable Transform precoding.

As an embodiment, the indication of one domain of the second target domain set in the first DCI that one of the domains depends on the configuration of RRC signaling includes: The indication of the domain of the second target domain set in the first DCI depends on the configuration of this RRC signaling.

As an embodiment, the indication of one domain of the second target domain set in the first DCI that one of the domains depends on the configuration of RRC signaling includes: the indication of the domain of the second target domain set in the first DCI depends on the configuration of this RRC signaling.

As an embodiment, the indication of one domain of the second target domain set in the first DCI that one of the domains depends on the configuration of RRC signaling includes: the indication of the domain of the second target domain set in the first DCI is based on a table (table) that depends on the configuration of this RRC signaling.

As an embodiment, the indication of one domain of the second target domain set in the first DCI that one of the domains depends on the configuration of RRC signaling includes: the domain of the second target domain set in the first DCI indicates a value in a range of values that RRC signaling is used to configure.

As an embodiment, the indication of one domain of the second target domain set in the first DCI that one of the domains depends on the configuration of RRC signaling includes: the content indicated by the domain of the second target domain set in the first DCI is indicated by this RRC signaling.

As an embodiment, the indication of one domain of the second target domain set in the first DCI that one of the domains depends on the configuration of RRC signaling includes: The meaning of bits in the domain of the second target domain set in the first DCI depends on the configuration of the RRC signaling.

As an embodiment, the indication of one domain of the second target domain set in the first DCI that one of the domains depends on the configuration of RRC signaling includes: the content indicated by the value of the domain of the second target domain set in the first DCI depends on the configuration of the RRC signaling.

As an embodiment, the indication of one domain of the second target domain set in the first DCI that one of the domains depends on the configuration of RRC signaling includes: this RRC signaling is used to configure what is indicated by the value of the domain of the second target domain set in the first DCI.

As an embodiment, the indication of one domain of the second target domain set in the first DCI that one of the domains depends on the configuration of RRC signaling includes: this RRC signaling is used to configure an indication of the domain of the second target domain set in the first DCI.

As an embodiment, the first cell is different from the second cell.

As an embodiment, the first RRC signaling is used to determine the Number of repetitions for data.

As an embodiment, the first RRC signaling is used to determine a Transmission scheme for PUSCH.

As an embodiment, the transmission scheme is one of the transmission of codebook-based, non-codebook-based, and single antenna ports.

As an embodiment, the transmission scheme is one of codebook-based transmission and non-codebook-based transmission.

As an embodiment, the first RRC signaling is used to determine a DMRS configuration for PUSCH transmission using PUSCH mapping type A.

As an embodiment, the first RRC signaling is used to determine a DMRS configuration for PUSCH transmission using PUSCH mapping type B.

As an embodiment, the first RRC signaling is used to determine the power control of PUSCH.

As an embodiment, the first RRC signaling is used to determine the frequency hopping mode.

As an embodiment, the first RRC signaling is used to determine a frequency displacement offsets(s) set.

As an embodiment, the first RRC signaling is used to determine a resource allocation type.

As an embodiment, the first RRC signaling is used to determine the frequency domain resource distribution type.

As an embodiment, the first RRC signaling is used to determine a List of time domain allocations for timing of UL assignment to UL data.

As an embodiment, the first RRC signaling is used to determine the MCS table used by PUSCH without a transform pre-encoder.

As an embodiment, the first RRC signaling is used to determine a MCS table used by PUSCH with a transform pre-encoder.

As an embodiment, the first RRC signaling is used to determine whether the transform pre-coding is enabled or not.

As an embodiment, the first RRC signaling is used to determine a particular selection of a transformer precoder for PUSCH.

As an embodiment, the first RRC signaling is used to determine the Subset of PMIs addressed by TPMI.

As an embodiment, the first RRC signaling is used to determine Subset of PMIs addressed by TRIs.

As an embodiment, the first RRC signaling is used to determine the RBG size for PUSCH selected between Configuration 1 and Configuration 2.

As an embodiment, the first RRC signaling is used to determine the beta offset amount set.

As an embodiment, the first RRC signaling is used to determine whether pi/2-BPSK modulation is enabled with transform pre-coding.

As an embodiment, the first RRC signaling is used to indicate the Number of repetitions for data.

As an embodiment, the first RRC signaling is used to indicate a Transmission scheme for PUSCH.

As an embodiment, the transmission scheme is one of the transmission of codebook-based, non-codebook-based, and single antenna ports.

As an embodiment, the transmission scheme is one of codebook-based transmission and non-codebook-based transmission.

As an embodiment, the first RRC signaling is used to indicate a DMRS configuration transmitted using PUSCH mapping type A.

As an embodiment, the first RRC signaling is used to indicate a DMRS configuration transmitted using PUSCH mapping type B.

As an embodiment, the first RRC signaling is used to indicate power control of PUSCH.

As an embodiment, the first RRC signaling is used to indicate a frequency hopping mode.

As an embodiment, the name of the first RRC signaling includes txConfig, and the first target domain set includes pre-coding information and layer number domains.

As an embodiment, the first RRC signaling is a txConfig, the first target domain set including pre-coding information and layer number domains.

As an embodiment, the first RRC signaling is used to indicate a transmission scheme of PUSCH, the first target domain set comprising pre-coding information and a layer number domain.

As an embodiment, the first RRC signaling is a txConfig, the first target domain set including pre-coding information and layer number domains.

As an embodiment, the name of the first RRC signaling includes a transformPrecoder, and the first target domain set includes PTRS-DMRS associated domains.

As an embodiment, the first RRC signaling is a transformPrecoder, the first target domain set includes PTRS-DMRS associated domains.

As an embodiment, the first RRC signaling is used to indicate whether the transform pre-coding is enabled, and the first target domain set includes PTRS-DMRS associated domains.

As an embodiment, the name of the first RRC signaling includes a transformPrecoder, and the first target domain set includes a DMRS sequence initialization domain.

As an embodiment, the first RRC signaling is a transformPrecoder, the first target domain set comprising a DMRS sequence initialization domain.

As an embodiment, the first RRC signaling is used to indicate whether the transform pre-coding is enabled, the first target domain set comprising a DMRS sequence initialization domain.

As an embodiment, the first RRC signaling is used to determine a frequency hopping offset(s) set.

As an embodiment, the first RRC signaling is used to indicate a resource allocation type.

As an embodiment, the first RRC signaling is used to indicate the frequency domain resource allocation type.

As an embodiment, the first RRC signaling is used to determine a List of time domain allocations for timing of UL assignment to UL data.

As an embodiment, the first RRC signaling is used to indicate the MCS table used by PUSCH without a transform pre-encoder.

As an embodiment, the first RRC signaling is used to indicate the MCS table used by PUSCH with a transform pre-encoder.

As an embodiment, the first RRC signaling is used to indicate whether the transform pre-coding is enabled or not.

As an embodiment, the first RRC signaling is used to indicate a particular selection of a transformer precoder for PUSCH.

As an embodiment, the first RRC signaling is used to indicate the Subset of PMIs addressed by TPMI.

As an embodiment, the first RRC signaling is used to indicate Subset of PMIs addressed by TRIs.

As an embodiment, the first RRC signaling is used to indicate the RBG size for PUSCH selected between Configuration 1 and Configuration 2.

As an embodiment, the first RRC signaling is used to indicate a beta offset set.

As an embodiment, the first RRC signaling is used to indicate whether pi/2-BPSK modulation is enabled with transform pre-coding.

As an embodiment, the first RRC signaling is used to indicate the presence of an Antenna ports domain.

As an embodiment, the first RRC signaling is used to indicate whether PUSCH repetition counted based on available time slots are enabled.

As an embodiment, the first RRC signaling is used to indicate that a set of the configured beta offsets on the HARQ-ACK are reused to the PUSCH with a different priority.

As an embodiment, the first RRC signaling is used to indicate information of a DMRS bundling for PUSCH.

As an embodiment, the first RRC signaling is used to indicate the presence or absence of a DMRS Sequence Initialization domain.

As an embodiment, the first RRC signaling is used to indicate the size of the HARQ process number domain.

As an embodiment, the first RRC signaling is used to indicate a pattern of invalid symbols for PUSCH transmission type B.

As an embodiment, the first RRC signaling is used to indicate: When two SRS resource sets are configured for PUSCH transmission and PUSCH transmission occasions are associated with two SRS resource sets, whether the Cyclical mapping pattern or Sequential mapping pattern should be followed.

As an embodiment, the first RRC signaling is used to indicate a list of minimum K2 values.

As an embodiment, the first RRC signaling is used to indicate the size of the Redundancy version domain.

As an embodiment, the first RRC signaling is used to indicate the number of symbols invalid for PUSCH repetition type B after the last semi-static Downlink (DL) symbol.

As an embodiment, the first RRC signaling is used to indicate the presence or absence of a priority indicator domain.

As an embodiment, the first RRC signaling is used to indicate whether PUSCH repetition type A is followed or whether PUSCH repetition type B is followed.

As an embodiment, the first RRC signaling is used to indicate the presence or absence of a second TPC domain.

As an embodiment, the first RRC signaling is used to indicate the RV offset configured for the starting Redundancy version (RV) for a first repetition (the first actual repetition in PUSCH repetition type B) corresponding to a second SRS resource set for PUSCH.

As an embodiment, the first RRC signaling is used to indicate a combined list of cycle prefix extensions, channel access priority classes (CAPC) and Uplink (UL) channel access types.

As an embodiment, the first RRC signaling is used to indicate UL full power transmission mode.

As an embodiment, the first RRC signaling is used to indicate the scheduling granularity applicable to the origin and length indications of the resource allocation type 1.

As an embodiment, the first RRC signaling is used to determine the presence of an Antenna ports domain.

As an embodiment, the first RRC signaling is used to indicate whether PUSCH repetition counted based on available time slots are enabled.

As an embodiment, the first RRC signaling is used to indicate that a set of the configured beta offsets on the HARQ-ACK are reused to the PUSCH with a different priority.

As an embodiment, the first RRC signaling is used to determine information of DMRS bundling for PUSCH.

As an embodiment, the first RRC signaling is used to indicate the presence or absence of a DMRS Sequence Initialization domain.

As an embodiment, the first RRC signaling is used to determine the size of the HARQ process number domain.

As an embodiment, the first RRC signaling is used to determine a pattern of invalid symbols for PUSCH transmission type B.

As an embodiment, the first RRC signaling is used to determine: When two SRS resource sets are configured for PUSCH transmission and PUSCH transmission occasions are associated with two SRS resource sets, whether the Cyclical mapping pattern or Sequential mapping pattern should be followed.

As an embodiment, the first RRC signaling is used to determine a list of minimum K2 values.

As an embodiment, the first RRC signaling is used to determine the size of the Redundancy version domain.

As an embodiment, the first RRC signaling is used to determine the number of symbols that are invalid for PUSCH repetition type B after the last semi-static Downlink (DL) symbol.

As an embodiment, the first RRC signaling is used to determine the presence or absence of a priority indicator domain.

As an embodiment, the first RRC signaling is used to determine whether PUSCH repetition type A is followed or PUSCH repetition type B is followed.

As an embodiment, the first RRC signaling is used to determine whether a second TPC domain is present or not.

As an embodiment, the first RRC signaling is used to determine the RV offset configured for the starting Redundancy version (RV) for a first repetition (the first actual repetition in PUSCH repetition type B) corresponding to a second SRS resource set for PUSCH.

As an embodiment, the first RRC signaling is used to determine a combined list of cycle prefix extensions, channel access priority classes (CAPC) and Uplink (UL) channel access types.

As an embodiment, the first RRC signaling is used to determine the UL full power transmission mode.

As an embodiment, the first RRC signaling is used to determine the scheduling granularity applicable to the origin and length indications of the resource allocation type 1.

As an embodiment, the first RRC signaling includes a push-AggregationFactor.

As an embodiment, the first RRC signaling includes a txConfig.

As an embodiment, the first RRC signaling includes a dmrs-UplinkForPUSCH-MappingTypeA.

As an embodiment, the first RRC signaling includes a dmrs-UplinkForPUSCH-MappingTypeB.

As an embodiment, the first RRC signaling includes a push-PowerControl.

As an embodiment, the first RRC signaling includes a frequencyHopping.

As an embodiment, the first RRC signaling includes a frequencyHoppingOffsetLists.

As an embodiment, the first RRC signaling includes a resourceAllocation.

As an embodiment, the first RRC signaling includes a push-TimeDomainAllocationList.

As an embodiment, the first RRC signaling includes a mcs-Table.

As an embodiment, the first RRC signaling includes a mcs-TableTransformPrecoder.

As an embodiment, the first RRC signaling includes a transformPrecoder.

As an embodiment, the first RRC signaling includes a codebookSubset.

As an embodiment, the first RRC signaling includes a maxRank.

As an embodiment, the first RRC signaling includes a rbg-size.

As an embodiment, the first RRC signaling includes an uci-OnPUSCH.

As an embodiment, the first RRC signaling includes a tp-pi2BPSK.

As an embodiment, the first RRC signaling is a push-AggregationFactor.

As an embodiment, the first RRC signaling is a txConfig.

As an embodiment, the first RRC signaling is a dmrs-UplinkForPUSCH-MappingTypeA.

As an embodiment, the first RRC signaling is a dmrs-UplinkForPUSCH-MappingTypeB.

As an embodiment, the first RRC signaling is a push-PowerControl.

As an embodiment, the first RRC signaling is a frequencyHopping.

As an embodiment, the first RRC signaling is a frequencyHoppingOffsetLists.

As an embodiment, the first RRC signaling is a resourceAllocation.

As an embodiment, the first RRC signaling is a push-TimeDomainAllocationList.

As an embodiment, the first RRC signaling is a mcs-Table.

As an embodiment, the first RRC signaling is a mcs-TableTransformPrecoder.

As an embodiment, the first RRC signaling is a transformPrecoder.

As an embodiment, the first RRC signaling is a codebookSubset.

As an embodiment, the first RRC signaling is a maxRank.

As an embodiment, the first RRC signaling is a rbg-Size.

As an embodiment, the first RRC signaling is an uci-OnPUSCH.

As an embodiment, the first RRC signaling is a tp-pi2BPSK.

As an embodiment, the name of the first RRC signaling includes a push-AgggregationFactor.

As an embodiment, the name of the first RRC signaling includes a txConfig.

As an embodiment, the name of the first RRC signaling includes a dmrs-UplinkForPUSCH-MappingTypeA.

As an embodiment, the name of the first RRC signaling includes a dmrs-UplinkForPUSCH-MappingTypeB.

As an embodiment, the name of the first RRC signaling includes a push-PowerControl.

As an embodiment, the name of the first RRC signaling includes a frequencyHopping.

As an embodiment, the name of the first RRC signaling includes a frequencyHoppingOffsetLists.

As an embodiment, the name of the first RRC signaling includes a resourceAllocation.

As an embodiment, the name of the first RRC signaling includes a push-TimeDomainAllocationList.

As an embodiment, the name of the first RRC signaling includes a mcs-Table.

As an embodiment, the name of the first RRC signaling includes a mcs-TableTransformPrecoder.

As an embodiment, the name of the first RRC signaling includes a transformPrecoder.

As an embodiment, the name of the first RRC signaling includes a codebookSubset.

As an embodiment, the name of the first RRC signaling includes a maxRank.

As an embodiment, the name of the first RRC signaling includes a rbg-size.

As an embodiment, the name of the first RRC signaling includes an uci-OnPUSCH.

As an embodiment, the name of the first RRC signaling includes a tp-pi2BPSK.

As an embodiment, the name of the first RRC signaling includes a minimumSchedulingOffsetK2.

As an embodiment, the name of the first RRC signaling includes an ul-AccessConfigList.

As an embodiment, the name of the first RRC signaling includes a harq-ProcessNumberSize.

As an embodiment, the name of the first RRC signaling includes a dmrs-SequenceInitialization.

As an embodiment, the name of the first RRC signaling includes a numberOfBitsForRV.

As an embodiment, the name of the first RRC signaling includes an antennaPortsFieldPresence.

As an embodiment, the name of the first RRC signaling includes an invalidSymbolPatternIndicator.

As an embodiment, the name of the first RRC signaling includes a priorityIndicator.

As an embodiment, the name of the first RRC signaling includes a push-RepTypeIndicator.

As an embodiment, the name of the first RRC signaling includes a resourceAllocationType1Granularity.

As an embodiment, the name of the first RRC signaling includes an ul-FullPowerTransmission.

As an embodiment, the name of the first RRC signaling includes a numberOfInvalidSymbolsForDL-UL-Switching.

As an embodiment, the name of the first RRC signaling includes a betaOffsetsCrossPri0.

As an embodiment, the name of the first RRC signaling includes a betaOffsetsCrossPri1.

As an embodiment, the name of the first RRC signaling includes a mappingPattern.

As an embodiment, the name of the first RRC signaling includes a secondTPCField.

As an embodiment, the name of the first RRC signaling includes a sequenceOffsetForRV.

As an embodiment, the name of the first RRC signaling includes an availableSlotCounting.

As an embodiment, the name of the first RRC signaling includes a dmrs-BundlingPUSCH-Config.

As an embodiment, the name of the first RRC signaling includes a -r17.

As an embodiment, the name of the first RRC signaling includes a -r16.

As an embodiment, the name of the first RRC signaling includes a -r18.

As an embodiment, the name of the first RRC signaling includes a -r19.

As an embodiment, the name of the first RRC signaling includes a -r20.

As an embodiment, the first RRC signaling is used to determine the number of maximum CBGs per TB.

As an embodiment, the first RRC signaling is used to determine whether to enable CBG based transmission.

As an embodiment, a plurality of RRC signaling are used to determine the maximum Multiple-Input Multiple-Output (MIMO) layer for PUSCH in all Bandwidth parts (BWPs) of the UL corresponding to the cell.

As an embodiment, the first RRC signaling is used to determine the number of HARQ processes used on the PUSCH of a cell.

As an embodiment, the first RRC signaling is used to determine whether to enable the configuration of the advanced processing time capability 2 for PUSCH.

As an embodiment, the first RRC signaling is used to determine whether to enable Limited buffer rate-matching (LBRM).

As an embodiment, the first RRC signaling is used to determine a HARQ mode for a HARQ process ID.

As an embodiment, the first RRC signaling is used to determine whether to enable group hopping for RMRS transmissions with pre-coding of transforms.

As an embodiment, the first RRC signaling is used to determine the power offset between msg3 and Random Access Channel(s) (RACH) preamble transmission.

As an embodiment, the first RRC signaling is used to determine (in addition to msg3) a P0 value for PUSCH grant.

As an embodiment, the first RRC signaling is used to indicate the number of maximum CBGs per TB.

As an embodiment, the first RRC signaling is used to indicate whether CBG-based transmission is enabled.

As an embodiment, the first RRC signaling is used to determine the maximum Multiple-Input Multiple-Output (MIMO) layer for PUSCH in all Bandwidth parts (BWPs) of the UL corresponding to the cell.

As an embodiment, the first RRC signaling is used to indicate the number of HARQ processes used on the PUSCH of a cell.

As an embodiment, the first RRC signaling is used to indicate whether to enable the configuration of the advanced processing time capability 2 for PUSCH.

As an embodiment, the first RRC signaling is used to indicate whether to enable Limited buffer rate-matching (LBRM).

As an embodiment, the first RRC signaling is used to indicate a HARQ mode for a HARQ process ID.

As an embodiment, the first RRC signaling is used to indicate whether to enable group hopping for RMRS transmissions with pre-coding of transforms.

As an embodiment, the first RRC signaling is used to indicate the power offset between msg3 and Random Access Channel(s) (RACH) preamble transmission.

As an embodiment, the first RRC signaling is used to indicate (in addition to msg3) a P0 value for PUSCH grant.

As an embodiment, the first RRC signaling is a codeBlockGroupTransmission.

As an embodiment, the first RRC signaling is a rateMatching.

As an embodiment, the first RRC signaling is a xOverhead.

As an embodiment, the first RRC signaling is a maxMIMO-Layers.

As an embodiment, the first RRC signaling is a processingType2Enabled.

As an embodiment, the first RRC signaling is a nrofHARQ-ProcessesForPUSCH-r17.

As an embodiment, the first RRC signaling is an uplinkHARQ-mode-r17.

As an embodiment, the first RRC signaling is a groupHopingEnabledTransformPrecoding.

As an embodiment, the first RRC signaling is a msg3-DeltaPreamble.

As an embodiment, the first RRC signaling is a p0-NominalWithGrant.

As an embodiment, the name of the first RRC signaling includes a codeBlockGroupTransmission.

As an embodiment, the name of the first RRC signaling includes a rateMatching.

As an embodiment, the name of the first RRC signaling includes a xOverhead.

As an embodiment, the name of the first RRC signaling includes a maxMIMO-Layers.

As an embodiment, the name of the first RRC signaling includes a processingType2Enabled.

As an embodiment, the name of the first RRC signaling includes a nrofHARQ-ProcessesForPUSCH.

As an embodiment, the name of the first RRC signaling includes an uplinkHARQ-mode.

As an embodiment, the name of the first RRC signaling includes a groupHoppingEnabledTransformPrecoding.

As an embodiment, the name of the first RRC signaling includes a msg3-DeltaPreamble.

As an embodiment, the name of the first RRC signaling includes a p0-NominalWithGrant.

As an embodiment, the first RRC signaling includes at least a portion of SRS-Config.

As an embodiment, the first RRC signaling is a SRS-Config.

As an embodiment, the name of the first RRC signaling includes a SRS-Config.

As an embodiment, the first RRC signaling includes an AvailableSlotOffset.

As an embodiment, the first RRC signaling is an AvailableSlotOffset.

As an embodiment, the second RRC signaling is used to determine the Number of repetitions for data.

As an embodiment, the second RRC signaling is used to determine a Transmission scheme for PUSCH.

As an embodiment, the transmission scheme is one of the transmission of codebook-based, non-codebook-based, and single antenna ports.

As an embodiment, the transmission scheme is one of codebook-based transmission and non-codebook-based transmission.

As an embodiment, the second RRC signaling is used to determine a DMRS configuration for PUSCH transmission using PUSCH mapping type A.

As an embodiment, the second RRC signaling is used to determine a DMRS configuration for PUSCH transmission using PUSCH mapping type B.

As an embodiment, the second RRC signaling is used to determine the power control of PUSCH.

As an embodiment, the second RRC signaling is used to determine the frequency hopping mode.

As an embodiment, the second RRC signaling is used to determine a frequency hopping offset(s) set.

As an embodiment, the second RRC signaling is used to determine the type of resource allocation.

As an embodiment, the second RRC signaling is used to determine the frequency domain resource allocation type.

As an embodiment, the second RRC signaling is used to determine a List of time domain allocations for timing of UL assignment to UL data.

As an embodiment, the second RRC signaling is used to determine the MCS table used by PUSCH without a transform pre-encoder.

As an embodiment, the second RRC signaling is used to determine the MCS table used by PUSCH with a transform pre-encoder.

As an embodiment, the second RRC signaling is used to determine whether the transform pre-coding is enabled or not.

As an embodiment, the second RRC signaling is used to determine a particular selection of a transformer precoder for PUSCH.

As an embodiment, the second RRC signaling is used to determine the Subset of PMIs addressed by TPMI.

As an embodiment, the second RRC signaling is used to determine Subset of PMIs addressed by TRIs.

As an embodiment, the second RRC signaling is used to determine the RBG size for PUSCH selected between Configuration 1 and Configuration 2.

As an embodiment, the second RRC signaling is used to determine the beta offset amount set.

As an embodiment, the second RRC signaling is used to determine whether pi/2-BPSK modulation is enabled with transform pre-coding.

As an embodiment, the second RRC signaling is used to indicate the Number of repetitions for data.

As an embodiment, the second RRC signaling is used to indicate a Transmission scheme for PUSCH.

As an embodiment, the transmission scheme is one of the transmission of codebook-based, non-codebook-based, and single antenna ports.

As an embodiment, the transmission scheme is one of codebook-based transmission and non-codebook-based transmission.

As an embodiment, the second RRC signaling is used to indicate the DMRS configuration transmitted using PUSCH mapping type A.

As an embodiment, the second RRC signaling is used to indicate a DMRS configuration for PUSCH transmission using PUSCH mapping type B.

As an embodiment, the second RRC signaling is used to indicate power control of PUSCH.

As an embodiment, the second RRC signaling is used to indicate a frequency hopping mode.

As an embodiment, the name of the second RRC signaling includes txConfig, the first target domain set including pre-coding information and layer number domains.

As an embodiment, the second RRC signaling is a txConfig, the first target domain set comprising pre-coding information and layer number domains.

As an embodiment, the second RRC signaling is used to indicate a transmission scheme of PUSCH, the first target domain set comprising pre-coding information and a layer number domain.

As an embodiment, the second RRC signaling is a txConfig, the first target domain set comprising pre-coding information and layer number domains.

As an embodiment, the name of the second RRC signaling includes a transformPrecoder, and the first target domain set includes PTRS-DMRS associated domains.

As an embodiment, the second RRC signaling is a transformPrecoder, the first target domain set includes PTRS-DMRS associated domains.

As an embodiment, the second RRC signaling is used to indicate whether the transform pre-encoding is enabled, the first target domain set including PTRS-DMRS associated domains.

As an embodiment, the name of the second RRC signaling includes a transformPrecoder, and the first target domain set includes a DMRS sequence initialization domain.

As an embodiment, the second RRC signaling is a transformPrecoder, the first target domain set comprising a DMRS sequence initialization domain.

As an embodiment, the second RRC signaling is used to indicate whether the transform pre-coding is enabled, the first target domain set comprising a DMRS sequence initialization domain.

As an embodiment, the second RRC signaling is used to indicate a frequency hopping offset(s) set.

As an embodiment, the second RRC signaling is used to indicate a resource allocation type.

As an embodiment, the second RRC signaling is used to indicate a frequency domain resource allocation type.

As an embodiment, the second RRC signaling is used to indicate a List of time domain allocations for timing of UL assignment to UL data.

As an embodiment, the second RRC signaling is used to indicate a MCS table used by PUSCH without a transform pre-encoder.

As an embodiment, the second RRC signaling is used to indicate a MCS table used by PUSCH with a transform pre-encoder.

As an embodiment, the second RRC signaling is used to indicate whether the transform pre-coding is enabled or not.

As an embodiment, the second RRC signaling is used to indicate a particular selection of a transformer precoder for PUSCH.

As an embodiment, the second RRC signaling is used to indicate the Subset of PMIs addressed by TPMI.

As an embodiment, the second RRC signaling is used to indicate a Subset of PMIs addressed by TRIs.

As an embodiment, the second RRC signaling is used to indicate the RBG size for PUSCH selected between Configuration 1 and Configuration 2.

As an embodiment, the second RRC signaling is used to indicate a beta offset set.

As an embodiment, the second RRC signaling is used to indicate whether pi/2-BPSK modulation is enabled with transform pre-coding.

As an embodiment, the second RRC signaling is used to indicate the presence of an Antenna ports domain.

As an embodiment, the second RRC signaling is used to indicate whether PUSCH repetition counted based on available time slots are enabled.

As an embodiment, the second RRC signaling is used to indicate that a set of the configured beta offsets on the HARQ-ACK are reused to the PUSCH with a different priority.

As an embodiment, the second RRC signaling is used to indicate information of a DMRS bundling for PUSCH.

As an embodiment, the second RRC signaling is used to indicate the presence or absence of a DMRS Sequence Initialization domain.

As an embodiment, the second RRC signaling is used to indicate the size of the HARQ process number domain.

As an embodiment, the second RRC signaling is used to indicate a pattern of invalid symbols for PUSCH transmission type B.

As an embodiment, the second RRC signaling is used to indicate: When two SRS resource sets are configured for PUSCH transmission and PUSCH transmission occasions are associated with two SRS resource sets, whether the Cyclical mapping pattern or Sequential mapping pattern should be followed.

As an embodiment, the second RRC signaling is used to indicate a list of minimum K2 values.

As an embodiment, the second RRC signaling is used to indicate the size of the Redundancy version domain.

As an embodiment, the second RRC signaling is used to indicate the number of symbols invalid for PUSCH repetition type B after the last semi-static Downlink (DL) symbol.

As an embodiment, the second RRC signaling is used to indicate the presence or absence of a priority indicator domain.

As an embodiment, the second RRC signaling is used to indicate whether PUSCH repetition type A is followed or PUSCH repetition type B is followed.

As an embodiment, the second RRC signaling is used to indicate the presence or absence of a second TPC domain.

As an embodiment, the second RRC signaling is used to indicate the RV offsets configured for the starting Redundancy version (RV) for a first repetition (the first actual repetition in PUSCH repetition type B) of a second SRS resource set corresponding to a PUSCH.

As an embodiment, the second RRC signaling is used to indicate a combined list of cycle prefix extensions, channel access priority classes (CAPC) and Uplink (UL) channel access types.

As an embodiment, the second RRC signaling is used to indicate UL full power transmission mode.

As an embodiment, the second RRC signaling is used to indicate the scheduling granularity applicable to the origin and length indications of the resource allocation type 1.

As an embodiment, the second RRC signaling is used to determine the presence of an Antenna ports domain.

As an embodiment, the second RRC signaling is used to determine whether to enable PUSCH repetition counted based on available time slots.

As an embodiment, the second RRC signaling is used to determine that a set of the configured beta offsets on the HARQ-ACK are reused to the PUSCH with a different priority.

As an embodiment, the second RRC signaling is used to determine information of DMRS bundling for PUSCH.

As an embodiment, the second RRC signaling is used to determine the presence or absence of a DMRS Sequence Initialization domain.

As an embodiment, the second RRC signaling is used to determine the size of the HARQ process number domain.

As an embodiment, the second RRC signaling is used to determine a pattern of invalid symbols for PUSCH transmission type B.

As an embodiment, the second RRC signaling is used to determine: When two SRS resource sets are configured for PUSCH transmission and PUSCH transmission occasions are associated with two SRS resource sets, whether the Cyclical mapping pattern or Sequential mapping pattern should be followed.

As an embodiment, the second RRC signaling is used to determine a list of minimum K2 values.

As an embodiment, the second RRC signaling is used to determine the size of the Redundancy version domain.

As an embodiment, the second RRC signaling is used to determine the number of symbols invalid for PUSCH repetition type B after the last semi-static Downlink (DL) symbol.

As an embodiment, the second RRC signaling is used to determine the presence or absence of a priority indicator domain.

As an embodiment, the second RRC signaling is used to determine whether to follow PUSCH repetition type A behavior or PUSCH repetition type B behavior.

As an embodiment, the second RRC signaling is used to determine whether a second TPC domain is present or not.

As an embodiment, the second RRC signaling is used to determine the RV offsets configured for the starting Redundancy version (RV) for a first repetition (the first actual repetition in PUSCH repetition type B) corresponding to a second SRS resource set for PUSCH.

As an embodiment, the second RRC signaling is used to determine a combined list of cycle prefix extensions, channel access priority classes (CAPC) and Uplink (UL) channel access types.

As an embodiment, the second RRC signaling is used to determine UL full power transmission mode.

As an embodiment, the second RRC signaling is used to determine the scheduling granularity applicable to the origin and length indications of the resource allocation type 1.

As an embodiment, the second RRC signaling includes a push-AggregationFactor.

As an embodiment, the second RRC signaling includes a txConfig.

As an embodiment, the second RRC signaling includes a dmrs-UplinkForPUSCH-MappingTypeA.

As an embodiment, the second RRC signaling includes a dmrs-UplinkForPUSCH-MappingTypeB.

As an embodiment, the second RRC signaling includes a push-PowerControl.

As an embodiment, the second RRC signaling includes a frequencyHopping.

As an embodiment, the second RRC signaling includes a frequencyHoppingOffsetLists.

As an embodiment, the second RRC signaling includes a resourceAllocation.

As an embodiment, the second RRC signaling includes a push-TimeDomainAllocationList.

As an embodiment, the second RRC signaling includes a mcs-Table.

As an embodiment, the second RRC signaling includes a mcs-TableTransformPrecoder.

As an embodiment, the second RRC signaling includes a transformPrecoder.

As an embodiment, the second RRC signaling includes a codebookSubset.

As an embodiment, the second RRC signaling includes a maxRank.

As an embodiment, the second RRC signaling includes a rbg-size.

As an embodiment, the second RRC signaling includes an uci-OnPUSCH.

As an embodiment, the second RRC signaling includes a tp-pi2BPSK.

As an embodiment, the second RRC signaling is a push-AggregationFactor.

As an embodiment, the second RRC signaling is a txConfig.

As an embodiment, the second RRC signaling is a dmrs-UplinkForPUSCH-MappingTypeA.

As an embodiment, the second RRC signaling is a dmrs-UplinkForPUSCH-MappingTypeB.

As an embodiment, the second RRC signaling is a push-PowerControl.

As an embodiment, the second RRC signaling is a frequencyHopping.

As an embodiment, the second RRC signaling is a frequencyHoppingOffsetLists.

As an embodiment, the second RRC signaling is a resourceAllocation.

As an embodiment, the second RRC signaling is a push-TimeDomainAllocationList.

As an embodiment, the second RRC signaling is a mcs-Table.

As an embodiment, the second RRC signaling is a mcs-TableTransformPrecoder.

As an embodiment, the second RRC signaling is a transformPrecoder.

As an embodiment, the second RRC signaling is a codebookSubset.

As an embodiment, the second RRC signaling is a maxRank.

As an embodiment, the second RRC signaling is a rbg-size.

As an embodiment, the second RRC signaling is an uci-OnPUSCH.

As an embodiment, the second RRC signaling is a tp-pi2BPSK.

As an embodiment, the name of the second RRC signaling includes a push-AgggregationFactor.

As an embodiment, the name of the second RRC signaling includes a txConfig.

As an embodiment, the name of the second RRC signaling includes a dmrs-UplinkForPUSCH-MappingTypeA.

As an embodiment, the name of the second RRC signaling includes a dmrs-UplinkForPUSCH-MappingTypeB.

As an embodiment, the name of the second RRC signaling includes a push-PowerControl.

As an embodiment, the name of the second RRC signaling includes a frequencyHopping.

As an embodiment, the name of the second RRC signaling includes a frequencyHoppingOffsetLists.

As an embodiment, the name of the second RRC signaling includes a resourceAllocation.

As an embodiment, the name of the second RRC signaling includes a push-TimeDomainAllocationList.

As an embodiment, the name of the second RRC signaling includes a mcs-Table.

As an embodiment, the name of the second RRC signaling includes a mcs-TableTransformPrecoder.

As an embodiment, the first name of the second RRC signaling includes a transformPrecoder.

As an embodiment, the name of the second RRC signaling includes a codebookSubset.

As an embodiment, the name of the second RRC signaling includes a maxRank.

As an embodiment, the name of the second RRC signaling includes a rbg-size.

As an embodiment, the name of the second RRC signaling includes an uci-OnPUSCH.

As an embodiment, the name of the second RRC signaling includes a tp-pi2BPSK.

As an embodiment, the name of the second RRC signaling includes a minimumSchedulingOffsetK2.

As an embodiment, the name of the second RRC signaling includes an ul-AccessConfigList.

As an embodiment, the name of the second RRC signaling includes a harq-ProcessNumberSize.

As an embodiment, the name of the second RRC signaling includes a dmrs-SequenceInitialization.

As an embodiment, the name of the second RRC signaling includes a numberOfBitsForRV.

As an embodiment, the name of the second RRC signaling includes an antennaPortsFieldPresence.

As an embodiment, the name of the second RRC signaling includes an invalidSymbolPatternIndicator.

As an embodiment, the name of the second RRC signaling includes a priorityIndicator.

As an embodiment, the name of the second RRC signaling includes a push-RepTypeIndicator.

As an embodiment, the name of the second RRC signaling includes a resourceAllocationType1Granularity.

As an embodiment, the name of the second RRC signaling includes an ul-FullPowerTransmission.

As an embodiment, the name of the second RRC signaling includes a numberOfInvalidSymbolsForDL-UL-Switching.

As an embodiment, the name of the second RRC signaling includes a betaOffsetsCrossPri0.

As an embodiment, the name of the second RRC signaling includes a betaOffsetsCrossPri1.

As an embodiment, the name of the second RRC signaling includes mappingPattern.

As an embodiment, the name of the second RRC signaling includes a secondTPCField.

As an embodiment, the name of the second RRC signaling includes a sequenceOffsetForRV.

As an embodiment, the name of the second RRC signaling includes an availableSlotCounting.

As an embodiment, the name of the second RRC signaling includes a dmrs-BundlingPUSCH-Config.

As an embodiment, the name of the second RRC signaling includes a -r17.

As an embodiment, the name of the second RRC signaling includes a -r16.

As an embodiment, the name of the second RRC signaling includes a -r18.

As an embodiment, the name of the second RRC signaling includes a -r19.

As an embodiment, the name of the second RRC signaling includes a -r20.

As an embodiment, the second RRC signaling is used to determine the number of maximum CBGs per TB.

As an embodiment, the second RRC signaling is used to determine whether to enable CBG-based transmission.

As an embodiment, the second RRC signaling is used to determine the maximum Multiple-Input Multiple-Output (MIMO) layer for PUSCH in all Bandwidth parts (BWPs) of the UL corresponding to the cell.

As an embodiment, the second RRC signaling is used to determine the number of HARQ processes used on the PUSCH of a cell.

As an embodiment, the second RRC signaling is used to determine whether to enable the configuration of the advanced processing time capability 2 for PUSCH.

As an embodiment, the second RRC signaling is used to determine whether to enable Limited buffer rate-matching (LBRM).

As an embodiment, the second RRC signaling is used to determine a HARQ mode for a HARQ process ID.

As an embodiment, the second RRC signaling is used to determine whether to enable group hopping for RMRS transmissions with pre-coding of transforms.

As an embodiment, the second RRC signaling is used to determine the power offset between msg3 and Random Access Channel(s) (RACH) preamble transmission.

As an embodiment, the second RRC signaling is used to determine (in addition to msg3) a P0 value for PUSCH grant.

As an embodiment, the second RRC signaling is used to indicate the number of maximum CBGs per TB.

As an embodiment, the second RRC signaling is used to indicate whether CBG-based transmission is enabled.

As an embodiment, the second RRC signaling is used to indicate the maximum Multiple-Input Multiple-Output (MIMO) layer for PUSCH in all Bandwidth parts (BWPs) of the UL corresponding to the cell.

As an embodiment, the second RRC signaling is used to indicate the number of HARQ processes used on the PUSCH of a cell.

As an embodiment, the second RRC signaling is used to indicate whether to enable the configuration of the advanced processing time capability 2 for PUSCH.

As an embodiment, the second RRC signaling is used to indicate whether to enable Limited buffer rate-matching (LBRM).

As an embodiment, the second RRC signaling is used to indicate a HARQ mode for a HARQ process ID.

As an embodiment, the second RRC signaling is used to indicate whether to enable group hopping for RMRS transmissions with pre-coding of transforms.

As an embodiment, the second RRC signaling is used to indicate the power offset between msg3 and Random Access Channel(s) (RACH) preamble transmission.

As an embodiment, the second RRC signaling is used to second (in addition to msg3) a P0 value for PUSCH grant.

As an embodiment, the second RRC signaling is a codeBlockGroupTransmission.

As an embodiment, the second RRC signaling is a rateMatching.

As an embodiment, the second RRC signaling is a xOverhead.

As an embodiment, the second RRC signaling is a maxMIMO-Layers.

As an embodiment, the second RRC signaling is a processingType2Enabled.

As an embodiment, the second RRC signaling is a nrofHARQ-ProcessesForPUSCH-r17.

As an embodiment, the second RRC signaling is an uplinkHARQ-mode-r17.

As an embodiment, the second RRC signaling is a groupHopingEnabledTransformPrecoding.

As an embodiment, the second RRC signaling is a msg3-DeltaPreamble.

As an embodiment, the second RRC signaling is a p0-NominalWithGrant.

As an embodiment, the name of the second RRC signaling includes a codeBlockGroupTransmission.

As an embodiment, the name of the second RRC signaling includes a rateMatching.

As an embodiment, the name of the second RRC signaling includes a xOverhead.

As an embodiment, the name of the second RRC signaling includes a maxMIMO-Layers.

As an embodiment, the name of the second RRC signaling includes a processingType2Enabled.

As an embodiment, the name of the second RRC signaling includes a nrofHARQ-ProcessesForPUSCH.

As an embodiment, the name of the second RRC signaling includes an uplinkHARQ-mode.

As an embodiment, the name of the second RRC signaling includes a groupHoppingEnabledTransformPrecoding.

As an embodiment, the name of the second RRC signaling includes a msg3-DeltaPreamble.

As an embodiment, the name of the second RRC signaling includes a p0-NominalWithGrant.

As an embodiment, the second RRC signaling includes at least a portion of SRS-Config.

As an embodiment, the second RRC signaling is a SRS-Config.

As an embodiment, the name of the second RRC signaling includes a SRS-Config.

As an embodiment, the second RRC signaling includes an AvailableSlotOffset.

As an embodiment, the second RRC signaling is an AvailableSlotOffset.

### Embodiment 11

Embodiment 11 exemplifies a block structural diagram of a processing device in a first node device, as shown in FIG. 11. In FIG. 11, a processing device 1100 in the first node device includes a first receiver 1101 and a first transmitter 1102.

As an embodiment, the first node device 1100 is a base station.

As an embodiment, the first node device 1100 is an user equipment.

As an embodiment, the first node device 1100 is a relay node.

As an embodiment, the first node device 1100 is an in-vehicle communications device.

As an embodiment, the first node device 1100 is an user equipment that supports V2X communication.

As an embodiment, the first node device 1100 is a relay node that supports V2X communication.

As an embodiment, the first node device 1100 is an user equipment that supports operation on a high frequency spectrum.

As an embodiment, the first node device 1100 is an user equipment that supports operation on a shared spectrum.

As an embodiment, the first node device 1100 is an user equipment that supports XR business.

As an embodiment, the first node device 1100 is an user equipment that supports one DCI to schedule PUSCH on a plurality of cells.

As an embodiment, the first receiver 1101 includes at least one of {the antenna 452, the receiver 454, the multi-antenna receiving processor 458, the receiving processor 456, the controller/processor 459, the memory 460, the data source 467} of Embodiment 4.

As an embodiment, the first receiver 1101 includes at least first five of {the antenna 452, the receiver 454, the multi-antenna receiving processor 458, the receiving processor 456, the controller/processor 459, the memory 460, the data source 467} of Embodiment 4.

As an embodiment, the first receiver 1101 includes at least first four of {the antenna 452, the receiver 454, the receiving processor 456, the multi-antenna receiving processor 458, the controller/processor 459, the memory 460, the data source 467} of Embodiment 4.

As an embodiment, the first receiver 1101 includes at least first three of {the antenna 452, the receiver 454, the multi-antenna receiving processor 458, the receiving processor 456, the controller/processor 459, the memory 460, the data source 467} of Embodiment 4.

As an embodiment, the first receiver 1101 includes at least first two of {the antenna 452, the receiver 454, the multi-antenna receiving processor 458, the receiving processor 456, the controller/processor 459, the memory 460, the data source 467} of Embodiment 4.

As an embodiment, the first transmitter 1102 includes at least one of {the antenna 452, the transmitter 454, the multi-antenna transmitting processor 457, the transmitting processor 468, the controller/processor 459, the memory 460, the data source 467} of Embodiment 4.

As an embodiment, the first transmitter 1102 includes at least first five of {the antenna 452, the transmitter 454, the multi-antenna transmitting processor 457, the transmitting processor 468, the controller/processor 459, the memory 460, the data source 467} of Embodiment 4.

As an embodiment, the first transmitter 1102 includes at least first four of {the antenna 452, the transmitter 454, the multi-antenna transmitting processor 457, the transmitting processor 468, the controller/processor 459, the memory 460, the data source 467} of Embodiment 4.

As an embodiment, the first transmitter 1102 includes at least first three of {the antenna 452, the transmitter 454, the multi-antenna transmitting processor 457, the transmitting processor 468, the controller/processor 459, the memory 460, the data source 467} of Embodiment 4.

As an embodiment, the first transmitter 1102 includes at least first two of {the antenna 452, the transmitter 454, the multi-antenna transmitting processor 457, the transmitting processor 468, the controller/processor 459, the memory 460, the data source 467} of Embodiment 4.

As an embodiment, the first receiver 1101 receiving a plurality of RRC signaling; receiving a first DCI, and the first DCI is used to schedule PUSCH on a target cell set, and the target cell set comprising a plurality of cells; the transmitter 1102 sending a PUSCH on each cell of the target cell set; wherein the first target domain set in the first DCI is applied to a plurality of cells in the target cell set; the first target domain set in the first DCI depends on the configuration of at least one RRC signaling in a plurality of RRC signaling, a plurality of RRC signaling are respectively configured for a plurality of cells in the target cell set, and the configurations of a plurality of RRC signaling are expected to be the same.

As an embodiment, a plurality of RRC signaling belongs to a plurality of PUSCH-Configs, respectively.

As an embodiment, a plurality of RRC signaling belongs to a plurality of PUSCH-ConfigCommons, respectively.

As an embodiment, a plurality of RRC signaling belongs to a plurality of PUSCH-ServingCellConfigs, respectively.

As an embodiment, if there are two different configurations of a plurality of RRC signaling, the first node determines its own processing of the first DCI.

As an embodiment, the size of one domain of the first target domain set in the first DCI depends on the configuration of at least one RRC signaling of a plurality of RRC signaling.

As an embodiment, an indication of one domain of the first target domain set in the first DCI depends on the configuration of at least one RRC signaling of a plurality of RRC signaling.

As an embodiment, the first receiver 1101 receives a first RRC signaling and a second RRC signaling; wherein the first DCI comprises a second target domain set, the second target domain set in the first DCI is applied to a plurality of cells in the target cell set; a plurality of cells in the target cell set comprises first cell and second cell, the first RRC signaling and the second RRC signaling is configured to the first cell and the second cell, respectively, and the configuration of the first RRC signaling is different from the configuration of the second RRC signaling; for the first cell, the indication of one domain of the second target domain set in the first DCI depends on the configuration of the first RRC signaling; for the second cell, the indication of the same domain of the second target domain set in the first DCI depends on the configuration of the second RRC signaling.

### Embodiment 12

Embodiment 12 exemplifies a block structural diagram of a processing device in a second node device, as shown in FIG. 12. In FIG. 12, the processing apparatus 1200 in the second node device includes a second transmitter 1201 and a second receiver 1202.

As an embodiment, the second node device 1200 is an user equipment.

As an embodiment, the second node device 1200 is a base station.

As an embodiment, the second node device 1200 is a satellite device.

As an embodiment, the second node device 1200 is a relay node.

As an embodiment, the second node device 1200 is an in-vehicle communications device.

As an embodiment, the second node device 1200 is an user equipment that supports V2X communication.

As an embodiment, the second node device 1200 is a device that supports operation on a high frequency spectrum.

As an embodiment, the second node device 1200 is a device that supports operation on a shared spectrum.

As an embodiment, the second node device 1200 is an XR service-enabled device.

As an embodiment, the second node device 1200 is a device that supports one DCI to schedule PUSCH on a plurality of cells.

As an embodiment, the second node device 1200 is one of a test apparatus, a test device, and a tester.

As an embodiment, the second transmitter 1201 includes at least one of {the antenna 420, the transmitter 418, the multi-antenna transmitting processor 471, the transmitting processor 416, the controller/processor 475, the memory 476} of Embodiment 4.

As an embodiment, the second transmitter 1201 includes at least first five of {the antenna 420, the transmitter 418, the multi-antenna transmitting processor 471, the transmitting processor 416, the controller/processor 475, the memory 476} of Embodiment 4.

As an embodiment, the second transmitter 1201 includes at least first four of {the antenna 420, the transmitter 418, the multi-antenna transmitting processor 471, the transmitting processor 416, the controller/processor 475, the memory 476} of Embodiment 4.

As an embodiment, the second transmitter 1201 includes at least first three of {the antenna 420, the transmitter 418, the multi-antenna transmitting processor 471, the transmitting processor 416, the controller/processor 475, the memory 476} of Embodiment 4.

As an embodiment, the second transmitter 1201 includes at least one of {the antenna 420, the transmitter 418, the transmitting processor 416, the multi-antenna transmitting processor 471, the controller/processor 475, the memory 476} of Embodiment 4.

As an embodiment, the second receiver 1202 includes at least one of the antenna 420, the receiver 418, the multi-antenna receiving processor 472, the receiving processor 470, the controller/processor 475, the memory 476 in FIG. 4 of the present application.

As an embodiment, the second receiver 1202 includes at least first five of the antenna 420, the receiver 418, the multi-antenna receiving processor 472, the receiving processor 470, the controller/processor 475, the memory 476 in FIG. 4 of the present application.

As an embodiment, the second receiver 1202 includes at least first four of {the antenna 420, the receiver 418, the receiving processor 470, the multi-antenna receiving processor 472, the controller/processor 475, the memory 476} of Embodiment 4.

As an embodiment, the second receiver 1202 includes at least first three of {the antenna 420, the receiver 418, the receiving processor 470, the multi-antenna receiving processor 472, the controller/processor 475, the memory 476} of Embodiment 4.

As an embodiment, the second receiver 1202 includes at least first two of {the antenna 420, the receiver 418, the receiving processor 470, the multi-antenna receiving processor 472, the controller/processor 475, the memory 476} of Embodiment 4.

As an embodiment, the second transmitter 1201 sending a plurality of RRC signaling; sending a first DCI, and the first DCI is used to schedule PUSCH on a target cell set, and the target cell set comprising a plurality of cells; the second receiver 1202 receiving a PUSCH on each cell of the target cell set; wherein the first target domain set in the first DCI is applied to a plurality of cells in the target cell set; the first target domain set in the first DCI depends on the configuration of at least one RRC signaling in a plurality of RRC signaling, a plurality of RRC signaling are respectively configured for a plurality of cells in the target cell set, and the configurations of a plurality of RRC signaling are expected to be the same.

As an embodiment, a plurality of RRC signaling belongs to a plurality of PUSCH-Configs, respectively.

As an embodiment, a plurality of RRC signaling belongs to a plurality of PUSCH-ConfigCommons, respectively.

As an embodiment, a plurality of RRC signaling belongs to a plurality of PUSCH-ServingCellConfigs, respectively.

As an embodiment, if there are two different configurations of a plurality of RRC signaling, the first node determines its own processing of the first DCI.

As an embodiment, the size of one domain of the first target domain set in the first DCI depends on the configuration of at least one RRC signaling of a plurality of RRC signaling.

As an embodiment, an indication of one domain of the first target domain set in the first DCI depends on the configuration of at least one RRC signaling of a plurality of RRC signaling.

As an embodiment, the second transmitter 1201 sending a first RRC signaling and a second RRC signaling; wherein the first DCI comprises a second target domain set, the second target domain set in the first DCI is applied to a plurality of cells in the target cell set; a plurality of cells in the target cell set comprises first cell and second cell, the first RRC signaling and the second RRC signaling is configured to the first cell and the second cell, respectively, and the configuration of the first RRC signaling is different from the configuration of the second RRC signaling; for the first cell, the indication of one domain of the second target domain set in the first DCI depends on the configuration of the first RRC signaling; for the second cell, the indication of the same domain of the second target domain set in the first DCI depends on the configuration of the second RRC signaling.

Those of ordinary skill in the art may understand that all or part of the steps in the above described methods can be accomplished by instructing relevant hardware through a program that can be stored in computer-readable storage media, such as read only memory, hard disk, or optical disk. Optionally, the steps of the above embodiments, in whole or in part, may also be implemented using one or more integrated circuits. Accordingly, the various module units in the above embodiments may be implemented in the form of hardware or in the form of software function modules. The present application is not limited to the combination of software and hardware of any particular form. The first node device in the present application includes, but is not limited to, cell phones, tablets, notebooks, network cards, low-power devices, eMTC devices, NB-IoT devices, in-vehicle communications devices, aircraft, drones, remotely controlled aircrafts and other wireless communication devices. The second node device in the present application includes, but is not limited to, cell phones, tablets, notebooks, network cards, low-power devices, eMTC devices, NB-IoT devices, in-vehicle communications devices, aircraft, drones, remotely controlled aircrafts and other wireless communication devices. The user equipment or UE or terminal in the present application includes, but is not limited to, cell phones, tablets, notebooks, radio cards, low-power devices, eMTC devices, NB-IoT devices, in-vehicle communications devices, aircraft, drones, remotely controlled aircrafts and other wireless communication devices. The base station equipment or base station or network side equipment in the present application includes, but is not limited to, macro-cellular base stations, micro-cellular base stations, femtocell base stations, relay base stations, eNBs, gNBs, transmission receiving nodes TRPs, GNSSs, relay satellites, satellite base stations, air base stations, test devices, test devices, test meters and other equipment.

Those skilled in the art will understand that the present disclosure can be implemented in other specific forms without departing from its core or essential characteristics. Thus, the presently disclosed embodiments should in any event be considered descriptive rather than restrictive. The scope of the disclosure is determined by the appended claims, not by the preceding description, and all variations within their equivalent meaning and area are considered to be included therein.

## Claims

1. A first node for wireless communication, wherein it comprises:
a first receiver receiving a plurality of RRC signaling; receiving a first DCI, and the first DCI being used to schedule PUSCH on a target cell set, and the target cell set comprising a plurality of cells;
a first transmitter transmitting PUSCH on each cell in the target cell set;
wherein the first target domain set in the first DCI is applied to a plurality of cells in the target cell set; the first target domain set in the first DCI depends on the configuration of at least one RRC signaling of a plurality of RRC signaling, which is respectively configured to a plurality of cells in the target cell set, the configuration of a plurality of RRC signaling being expected to be the same.

2. The first node according to Claim 1, wherein a plurality of RRC signaling belongs to a plurality of PUSCH-Configs, respectively.

3. The first node according to Claim 1, wherein the a plurality of RRC signaling belongs to a plurality of PUSCH-ConfigCommons, or the a plurality of RRC signaling belongs to a plurality of PUSCH-ServingCellConfigs, respectively.

4. The first node according to any one of Claims 1-3, wherein if there are two different configurations of a plurality of RRC signaling, the first node determines its own treatment of the first DCI.

5. The first node according to any one of Claims 1-4, wherein the size of one domain of the first target domain set in the first DCI depends on the configuration of at least one RRC signaling of a plurality of RRC signaling.

6. The first node according to any one of Claims 1-5, wherein an indication of one domain of the first target domain set in the first DCI depends on the configuration of at least one RRC signaling of a plurality of RRC signaling.

7. The first node according to any one of Claims 1-6, wherein it comprises:
the first receiver receiving a first RRC signaling and a second RRC signaling;
wherein the first DCI comprises a second target domain set, the second target domain set in the first DCI is applied to a plurality of cells in the target cell set; a plurality of cells in the target cell set comprises first cell and second cell, the first RRC signaling and the second RRC signaling is configured to the first cell and the second cell, respectively, and the configuration of the first RRC signaling is different from the configuration of the second RRC signaling; for the first cell, the indication of one domain of the second target domain set in the first DCI depends on the configuration of the first RRC signaling; for the second cell, the indication of the domain of the second target domain set in the first DCI depends on the configuration of the second RRC signaling.

8. A second node for wireless communication, wherein it comprises:
a second transmitter sending a plurality of RRC signaling; sending a first DCI, the first DCI being used to schedule PUSCH on a target cell set, the target cell set comprising a plurality of cells;
a second receiver receiving PUSCH on each cell in the target cell set;
wherein the first target domain set in the first DCI is applied to a plurality of cells in the target cell set; the first target domain set in the first DCI depends on the configuration of at least one RRC signaling of a plurality of RRC signaling, which is respectively configured to a plurality of cells in the target cell set, the configuration of a plurality of RRC signaling being expected to be the same.

9. A method for a first node in wireless communication, wherein it comprises:
receive a plurality of RRC signaling; receive a first DCI, and the first DCI is used to schedule a PUSCH on a target cell set, and the target cell set comprising a plurality of cells;
sending PUSCH on each cell in the target cell set;
wherein the first target domain set in the first DCI is applied to a plurality of cells in the target cell set; the first target domain set in the first DCI depends on the configuration of at least one RRC signaling of a plurality of RRC signaling, which is respectively configured to a plurality of cells in the target cell set, the configuration of a plurality of RRC signaling being expected to be the same.

10. A method used in a second node for wireless communication, wherein it comprises:
sending a plurality of RRC signaling; sending a first DCI that is used to schedule PUSCH on a target cell set, the target cell set comprising a plurality of cells;
receiving PUSCH on each cell in the target cell set;
wherein the first target domain set in the first DCI is applied to a plurality of cells in the target cell set; the first target domain set in the first DCI depends on the configuration of at least one RRC signaling of a plurality of RRC signaling, which is respectively configured to a plurality of cells in the target cell set, the configuration of a plurality of RRC signaling being expected to be the same.
